# EUROPEAN PATENT APPLICATION

(11) **EP 4 827 017 A1**
(43) Date of publication of application: **21.10.2026**
(21) Application number: 24914925.3
(22) Date of filing: 30.09.2024
(51) Int. Cl.: H04B 10/25

(54) **OPTICAL COMMUNICATION SYSTEM AND METHOD, RELATED APPARATUS, STORAGE MEDIUM, AND PROGRAM PRODUCT**

(30) Priority: 05.01.2024 CN 202410022086
(71) Applicant: Huawei Technologies Co., Ltd., Shenzhen, Guangdong 518129 (CN)
(72) Inventor: GAO, Shimin, Shenzhen, Guangdong 518129 (CN); YANG, Yumeng, Shenzhen, Guangdong 518129 (CN); HAN, Tao, Shenzhen, Guangdong 518129 (CN); TAN, Jiansi, Shenzhen, Guangdong 518129 (CN)
(74) Representative: Gill Jennings & Every LLP
(86) International application number: PCT/CN2024/122782
(87) International publication number: WO 2025/145704

(57) **Abstract**

This application discloses an optical communication system and method, a related apparatus, a storage medium, and a program product, and pertains to the field of communication technologies. To allow for intermixture of optical modules, improve networking flexibility, and reduce difficulty in device management and maintenance. In an implementation, an intermediate device splits a downstream optical signal having a plurality of downstream wavelengths into a plurality of downstream optical signals, and transmits an obtained downstream optical signal to each access-side optical module. Even if the optical modules are intermixed, each can obtain an optical signal of a respective corresponding downstream wavelength from a received downstream optical signal. In another implementation, even if the optical modules are intermixed, an intermediate device can still couple received optical signals of a plurality of upstream wavelengths via an optical coupler and then transmit a coupled optical signal to a central optical module. In this way, although a case in which transmitting and receiving of one or some photoelectric conversion submodules of the central optical module do not match, a routing and switching device can implement transmitting and receiving matching via a transceiver matching module, thereby ensuring reliability of optical communication.

## Description

This application claims priority to Chinese Patent Application No. 202410022086.1, filed on January 5, 2024 and entitled "OPTICAL COMMUNICATION SYSTEM AND METHOD, RELATED APPARATUS, STORAGE MEDIUM, AND PROGRAM PRODUCT", which is incorporated herein by reference in its entirety.

### TECHNICAL FIELD

This application relates to the field of communication technologies, and in particular, to an optical communication system and method, a related apparatus, a storage medium, and a program product.

### BACKGROUND

Optical communication refers to transmission, through optical fibers, of optical signals that carry information. To ensure quality of optical communication, an optical fiber may be directly pulled into a user room, thereby achieving fiber-to-the-home. In a fiber-to-the-home scenario, optical fibers are pulled into rooms on each floor in a campus, and are used to transmit upstream and downstream information between optical access devices in the rooms and a central switch in the campus.

The optical access device is usually connected to the central switch via an optical multiplexer/demultiplexer. One central switch can perform optical communication with a plurality of optical access devices via an intermediate device. Each optical access device is equipped with an optical module. A plurality of optical modules are connected to a same optical multiplexer/demultiplexer through optical fibers, and then the optical multiplexer/demultiplexer is connected to the central switch, to implement optical communication between the plurality of optical access devices and the central switch.

In a related technology, an optical multiplexer/demultiplexer has a plurality of ports, and the plurality of ports are in one-to-one correspondence with a plurality of pairs of wavelengths. Each pair of wavelengths includes an upstream wavelength and a downstream wavelength. The plurality of pairs of wavelengths are further in one-to-one correspondence with a plurality of optical modules. An optical fiber connected to an optical module needs to be inserted into a corresponding port based on a corresponding wavelength. In other words, the plurality of optical modules need to match the plurality of ports, and cannot be intermixed. If the optical modules are intermixed, an optical multiplexer/demultiplexer cannot process these optical signals. For example, an upstream wavelength 1 corresponds to a port 1 and an optical module 1, and an upstream wavelength 2 corresponds to a port 2 and an optical module 2. If an optical fiber connected to the optical module 1 is inserted into the port 2 and an optical fiber connected to the optical module 2 is inserted into the port 1, the port 1 and the port 2 receive optical signals of unmatched upstream wavelengths. Consequently, these optical signals cannot be transmitted to a central switch, affecting optical communication.

It can be learned that, in the related technology, the plurality of optical modules cannot be intermixed, which causes poor flexibility of optical communication networking, and difficult device management and maintenance. In addition, if an optical module is inserted into an inappropriate port, optical communication is affected.

### SUMMARY

This application provides an optical communication system and method, a related apparatus, a storage medium, and a program product, to allow for intermixture of optical modules on an access side, improve flexibility of optical networking, and reduce difficulty in device management and maintenance. The technical solutions are as follows.

According to a first aspect, an optical communication system is provided. The optical communication system includes a central optical module, an intermediate device, and a plurality of access-side optical modules, where the central optical module is connected to the intermediate device through an optical fiber, the intermediate device includes a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths.

The central optical module is configured to transmit a first downstream optical signal to the intermediate device, where the first downstream optical signal has a plurality of downstream wavelengths, and the plurality of downstream wavelengths include a downstream wavelength corresponding to at least one access-side optical module.

The intermediate device is configured to: receive a second downstream optical signal, split the second downstream optical signal into a plurality of third downstream optical signals, and transmit, through each of the plurality of ports, a third downstream optical signal to an access-side optical module connected to the port, where the second downstream optical signal is an optical signal obtained by transmitting the first downstream optical signal through the optical fiber between the central optical module and the intermediate device, and each of the plurality of third downstream optical signals has the plurality of downstream wavelengths.

Each of the plurality of access-side optical modules is configured to: receive a fourth downstream optical signal, and obtain, from the fourth downstream optical signal, an optical signal of a downstream wavelength corresponding to the access-side optical module, where the fourth downstream optical signal is an optical signal obtained by transmitting the third downstream optical signal through an optical fiber between the access-side optical module and the port.

That is, to allow for intermixture of optical modules without affecting optical communication, improve networking flexibility of optical communication, and reduce difficulty in device management and maintenance, the intermediate device splits the second downstream optical signal having the plurality of downstream wavelengths into the plurality of third downstream optical signals having the plurality of downstream wavelengths, and transmits one third downstream optical signal to each of the plurality of access-side optical modules through the plurality of ports. Even if the plurality of access-side optical modules are intermixed, each can obtain an optical signal of a respective corresponding downstream wavelength from a received downstream optical signal.

In a first implementation, the access-side optical module includes a first filter, and the first filter is configured to filter the fourth downstream optical signal, to obtain the optical signal of the downstream wavelength corresponding to the access-side optical module.

The central optical module includes a first optical multiplexer, and the intermediate device further includes a first optical splitter. The first optical splitter is separately connected to the foregoing plurality of ports through optical fibers. The first optical multiplexer is configured to: obtain optical signals of the foregoing plurality of downstream wavelengths, combine the optical signals of the foregoing plurality of downstream wavelengths into the first downstream optical signal, and transmit the first downstream optical signal to the first optical splitter. The first optical splitter is configured to: receive the second downstream optical signal, split the second downstream optical signal into the foregoing plurality of third downstream optical signals in an energy division manner, and transmit a third downstream optical signal to each of the plurality of ports.

In a possible implementation, the intermediate device further includes a first beamsplitter, the central optical module also further includes a second beamsplitter, the first beamsplitter is separately connected to the second beamsplitter and the first optical splitter through optical fibers, and the second beamsplitter is further connected to the first optical multiplexer through an optical fiber. The first optical multiplexer is further configured to transmit the first downstream optical signal to the second beamsplitter. The second beamsplitter is configured to transmit the first downstream optical signal to the first beamsplitter. The first beamsplitter is configured to: receive the second downstream optical signal, and transmit the second downstream optical signal to the first optical splitter. In this way, communication between the intermediate device and the central optical module can be implemented through connection with one optical cable, that is, communication is implemented through a single fiber.

Alternatively, the first optical multiplexer is connected to the first optical splitter through an optical fiber, and the first optical multiplexer is further configured to transmit the first downstream optical signal to the first optical splitter. In this way, communication between the intermediate device and the central optical module can be implemented through connection with two optical cables, that is, communication is implemented through dual fibers.

In this application, each access-side optical module further corresponds to an upstream wavelength, and different access-side optical modules correspond to different upstream wavelengths.

Each of the plurality of access-side optical modules is further configured to transmit, to the port connected to the access-side optical module, an optical signal of an upstream wavelength corresponding to the access-side optical module.

The intermediate device is further configured to: obtain, through the plurality of ports, optical signals of a plurality of upstream wavelengths transmitted by the plurality of access-side optical modules, combine the received optical signals of the plurality of upstream wavelengths into a first upstream optical signal, and transmit the first upstream optical signal to the central optical module.

The central optical module is further configured to receive a second upstream optical signal, and demultiplex the second upstream optical signal into the optical signals of the plurality of upstream wavelengths, where the second upstream optical signal is an optical signal obtained by transmitting the first upstream optical signal through the optical fiber between the intermediate device and the central optical module.

The access-side optical module further includes a first laser, and the first laser is connected to the port through an optical fiber. The first laser is configured to: generate an optical signal of an upstream wavelength corresponding to the access-side optical module, and transmit the optical signal of the upstream wavelength to the connected port.

The intermediate device further includes a first optical coupler, the central optical module includes a first optical demultiplexer, and the first optical coupler is separately connected to the plurality of ports through optical fibers. The first optical coupler is configured to couple the optical signals of the plurality of upstream wavelengths into the first upstream optical signal in an energy combination manner.

The first optical demultiplexer is configured to demultiplex the second upstream optical signal into the optical signals of the plurality of upstream wavelengths.

In a possible implementation, the intermediate device further includes a first beamsplitter, the central optical module further includes a second beamsplitter, the first beamsplitter is separately connected to the second beamsplitter and the first optical coupler through optical fibers, and the second beamsplitter is further connected to the first optical demultiplexer through an optical fiber. The first optical coupler is further configured to transmit the first upstream optical signal to the first beamsplitter; the first beamsplitter is configured to transmit the first upstream optical signal to the second beamsplitter; and the second beamsplitter is configured to: receive the second upstream optical signal, and transmit the second upstream optical signal to the first optical demultiplexer. In this way, with reference to both upstream and downstream directions, communication between the intermediate device and the central optical module can be implemented through connection with one optical cable, that is, communication is implemented through a single fiber.

Alternatively, the first optical demultiplexer is connected to the first optical coupler through an optical fiber, and the first optical coupler is configured to transmit the first upstream optical signal to the first optical demultiplexer. In this way, with reference to both upstream and downstream directions, communication between the intermediate device and the central optical module can be implemented through two optical cables, that is, communication is implemented through dual fibers.

In another implementation, the access-side optical module includes a third beamsplitter and a second filter, and the third beamsplitter is separately connected to the port and the second filter through optical fibers. The third beamsplitter is configured to: receive the fourth downstream optical signal, and transmit the fourth downstream optical signal to the second filter. The second filter is configured to filter the fourth downstream optical signal, to obtain the optical signal of the downstream wavelength corresponding to the access-side optical module. In other words, the beamsplitter of the intermediate device in the first implementation is integrated into the access-side optical module.

The intermediate device further includes a second optical splitter, the second optical splitter is separately connected to the plurality of ports through optical fibers, and the second optical splitter is further connected to the central optical module through an optical fiber; and the second optical splitter is configured to: split the second downstream optical signal into the plurality of third downstream optical signals in an energy division manner, and transmit the third downstream optical signals to the plurality of ports.

In this implementation, each access-side optical module further corresponds to an upstream wavelength, different access-side optical modules correspond to different upstream wavelengths, the access-side optical module further includes a second laser, and the second laser is connected to the third beamsplitter through an optical fiber.

The second laser is configured to: generate an optical signal of an upstream wavelength corresponding to the access-side optical module, and transmit the optical signal of the upstream wavelength to the third beamsplitter.

The third beamsplitter is further configured to transmit the optical signal of the upstream wavelength to the connected port.

The second optical splitter is further configured to: couple, in an energy combination manner, optical signals of a plurality of upstream wavelengths transmitted by the plurality of ports into a first upstream optical signal, and transmit the first upstream optical signal to the central optical module.

In a possible implementation, the access-side optical module is inserted into an access device, or the access-side optical module is integrated in an access device, and the access device is configured to access the optical communication system via the access-side optical module.

The central optical module is inserted into a routing and switching device, or the central optical module is integrated in a routing and switching device, and the routing and switching device is configured to communicate with the access device via the central optical module.

According to a second aspect, an optical communication method is provided, and is applied to a first optical module in a plurality of access-side optical modules included in an optical communication system. The optical communication system further includes an intermediate device, the intermediate device includes a plurality of ports, each of the plurality of access-side optical modules is connected to any one of the plurality of ports through an optical fiber, and different access-side optical modules are connected to different ports; the first optical module is connected to a first port in the plurality of ports through an optical fiber; each access-side optical module corresponds to a downstream wavelength, different access-side optical modules correspond to different downstream wavelengths, and the first optical module corresponds to a first downstream wavelength; and the method includes:
receiving a downstream optical signal transmitted by the first port, where the downstream optical signal has a plurality of downstream wavelengths, and the plurality of downstream wavelengths include a downstream wavelength corresponding to at least one access-side optical module; and
obtaining an optical signal of the first downstream wavelength from the downstream optical signal.

In a possible implementation, the first optical module includes a first filter.

Obtaining the optical signal of the first downstream wavelength from the downstream optical signal includes:

The first filter filters the downstream optical signal to obtain the optical signal of the first downstream wavelength.

In a possible implementation, each access-side optical module further corresponds to an upstream wavelength, different access-side optical modules correspond to different upstream wavelengths, and the first optical module further corresponds to a first upstream wavelength; and the method further includes:
generating an optical signal of the first upstream wavelength; and
transmitting the optical signal of the first upstream wavelength to the first port.

In a possible implementation, the first optical module further includes a first laser, and the first laser is connected to the first port through an optical fiber.

Generating the optical signal of the first upstream wavelength includes:

The first laser generates the optical signal of the first upstream wavelength.

In a possible implementation, the first optical module includes a first beamsplitter and a second filter, and the first beamsplitter is separately connected to the first port and the second filter through optical fibers.

Receiving the downstream optical signal transmitted by the first port includes:

The first beamsplitter receives the downstream optical signal transmitted by the first port.

Obtaining the optical signal of the first downstream wavelength from the downstream optical signal includes:

The first beamsplitter transmits the downstream optical signal to the second filter; and
the second filter demultiplexes the downstream optical signal to obtain the optical signal of the first downstream wavelength.

In a possible implementation, each access-side optical module further corresponds to an upstream wavelength, different access-side optical modules correspond to different upstream wavelengths, and the first optical module further corresponds to a first upstream wavelength. The first optical module further includes a second laser, and the second laser is connected to the first beamsplitter. The method further includes:

The second laser generates an optical signal of the first upstream wavelength, and transmitting the optical signal of the first upstream wavelength to the first beamsplitter; and
the first beamsplitter transmits the optical signal of the first upstream wavelength to the first port.

In a possible implementation, the first optical module is inserted into an access device, or the first optical module is integrated in an access device, and the access device is configured to access the optical communication system via the first optical module.

According to a third aspect, an optical communication method is provided, and is applied to an intermediate device in an optical communication system. The optical communication system further includes a central optical module and a plurality of access-side optical modules, where the central optical module is connected to the intermediate device through an optical fiber, the intermediate device includes a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths; and the method includes:
receiving a first downstream optical signal transmitted by the central optical module, to obtain a second downstream optical signal, where the first downstream optical signal has a plurality of downstream wavelengths, the plurality of downstream wavelengths include a downstream wavelength corresponding to at least one access-side optical module, and the second downstream optical signal is an optical signal obtained by transmitting the first downstream optical signal through the optical fiber between the central optical module and the intermediate device;
splitting the second downstream optical signal into a plurality of third downstream optical signals, where each of the plurality of third downstream optical signals has the plurality of downstream wavelengths; and
transmitting, through each of the plurality of ports, a third downstream optical signal to an access-side optical module connected to the port, where the third downstream optical signal is used by each of the plurality of access-side optical modules to obtain an optical signal of a downstream wavelength corresponding to the access-side optical module.

In a possible implementation, the intermediate device further includes a first optical splitter, and the first optical splitter is separately connected to the plurality of ports through optical fibers.

Splitting the second downstream optical signal into the plurality of third downstream optical signals includes:

The first optical splitter splits the second downstream optical signal into the plurality of third downstream optical signals in an energy division manner.

In a possible implementation, the intermediate device further includes a first beamsplitter, the central optical module includes a second beamsplitter, and the first beamsplitter is separately connected to the second beamsplitter and the first optical splitter through optical fibers.

Receiving the first downstream optical signal transmitted by the central optical module, to obtain the second downstream optical signal includes:

The first beamsplitter receives the first downstream optical signal transmitted by the second beamsplitter, to obtain the second downstream optical signal.

In a possible implementation, the central optical module includes a first optical multiplexer, and the first optical multiplexer is connected to the first optical splitter through an optical fiber.

Receiving the first downstream optical signal transmitted by the central optical module, to obtain the second downstream optical signal includes:

The first optical splitter receives the first downstream optical signal transmitted by the first optical multiplexer, to obtain the second downstream optical signal.

In a possible implementation, each access-side optical module further corresponds to an upstream wavelength, and different access-side optical modules correspond to different upstream wavelengths. The method further includes:
receiving optical signals of a plurality of upstream wavelengths through the plurality of ports, where the plurality of upstream wavelengths include an upstream wavelength corresponding to at least one access-side optical module;
combining the optical signals of the plurality of upstream wavelengths into a first upstream optical signal; and
transmitting the first upstream optical signal to the central optical module.

In a possible implementation, the intermediate device further includes a first optical coupler, and the first optical coupler is separately connected to the plurality of ports through optical fibers.

Combining the optical signals of the plurality of upstream wavelengths into the first upstream optical signal includes:

The first optical coupler combines the optical signals of the plurality of upstream wavelengths into the first upstream optical signal in an energy combination manner.

In a possible implementation, the intermediate device further includes a first beamsplitter, the central optical module further includes a second beamsplitter, and the first beamsplitter is separately connected to the second beamsplitter and a first optical coupler through optical fibers.

Transmitting the first upstream optical signal to the central optical module includes:

The first optical coupler transmits the first upstream optical signal to the first beamsplitter; and
the first beamsplitter transmits the first upstream optical signal to the second beamsplitter.

In a possible implementation, the first optical splitter is further connected to the central optical module through an optical fiber.

Receiving the first downstream optical signal transmitted by the central optical module, to obtain the second downstream optical signal includes:

The first optical splitter receives the first downstream optical signal transmitted by the central optical module, to obtain the second downstream optical signal.

In a possible implementation, each access-side optical module further corresponds to an upstream wavelength, and different access-side optical modules correspond to different upstream wavelengths. The method further includes:

The first optical splitter obtains optical signals of a plurality of upstream wavelengths transmitted by the plurality of ports, where the plurality of upstream wavelengths include an upstream wavelength corresponding to at least one access-side optical module; and
the first optical splitter couples, in an energy combination manner, the optical signals of the plurality of upstream wavelengths transmitted by the plurality of ports into a first upstream optical signal, and transmits the first upstream optical signal to the central optical module.

According to a fourth aspect, an optical communication method is provided, and is applied to a central optical module in an optical communication system. The optical communication system further includes an intermediate device and a plurality of access-side optical modules, where the central optical module is connected to the intermediate device through an optical fiber, the intermediate device includes a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths; and the method includes:
generating optical signals of a plurality of downstream wavelengths, where the plurality of downstream wavelengths include a downstream wavelength corresponding to at least one access-side optical module;
combining the optical signals of the plurality of downstream wavelengths into a first downstream optical signal, where the first downstream optical signal has the plurality of downstream wavelengths; and
transmitting the first downstream optical signal to the intermediate device, where the first downstream optical signal is used by the intermediate device to split a received second downstream optical signal into a plurality of third downstream optical signals, and transmit, through each of the plurality of ports, a third downstream optical signal to an access-side optical module connected to the port, so that each access-side optical module obtains, from a received fourth downstream optical signal, an optical signal of a downstream wavelength corresponding to the access-side optical module, where the second downstream optical signal is an optical signal obtained by transmitting the first downstream optical signal through the optical fiber between the central optical module and the intermediate device, and the fourth downstream optical signal is an optical signal obtained by transmitting the third downstream optical signal through an optical fiber between the access-side optical module and the port.

The central optical module is inserted into a routing and switching device, or the central optical module is integrated in a routing and switching device, and the routing and switching device is configured to access the optical communication system via the central optical module.

According to a fifth aspect, a communication apparatus is provided. The communication apparatus has a function of implementing behavior of the optical communication method in the second aspect, the third aspect, or the fourth aspect. The communication apparatus includes one or more modules, and the one or more modules are configured to implement the optical communication method provided in the second aspect, the third aspect, or the fourth aspect.

According to a sixth aspect, an optical communication system is provided. The optical communication system includes a routing and switching device, and the routing and switching device is inserted with a central optical module or is integrated with a central optical module; the optical communication system further includes an intermediate device and a plurality of access-side optical modules, where the central optical module is connected to the intermediate device through an optical fiber, the routing and switching device further includes a transceiver matching module, and the central optical module includes a first optical demultiplexer and a plurality of photoelectric conversion submodules, where the first optical demultiplexer is separately connected to the plurality of photoelectric conversion submodules through optical fibers, each photoelectric conversion submodule corresponds to one upstream wavelength and one downstream wavelength that have a matching relationship, and different photoelectric conversion submodules correspond to different upstream wavelengths and different downstream wavelengths; the intermediate device includes a first optical coupler and a plurality of ports, and the first optical coupler is separately connected to the plurality of ports through optical fibers; and each of the plurality of access-side optical modules is connected to any one of the plurality of ports through an optical fiber, different access-side optical modules are connected to different ports, each port corresponds to a downstream wavelength, different ports correspond to different downstream wavelengths, each access-side optical module corresponds to an upstream wavelength, and different access-side optical modules correspond to different upstream wavelengths.

Each of the plurality of photoelectric conversion submodules is configured to: obtain a first downstream electrical signal transmitted by the routing and switching device, convert the obtained first downstream electrical signal into an optical signal of a downstream wavelength corresponding to the photoelectric conversion submodule, and transmit the optical signal of the downstream wavelength to the intermediate device.

The intermediate device is configured to: obtain optical signals of a plurality of downstream wavelengths, and transmit, through each of the plurality of ports, an optical signal of a downstream wavelength corresponding to the port to an access-side optical module connected to the port, where the plurality of downstream wavelengths include a downstream wavelength corresponding to at least one port.

A first optical module in the plurality of access-side optical modules is configured to receive an optical signal of a first downstream wavelength transmitted by a first port connected to the first optical module, and is further configured to transmit an optical signal of a first upstream wavelength to the first port, where the first downstream wavelength does not match the first upstream wavelength, and the first optical module is any one of the plurality of access-side optical modules.

The intermediate device is further configured to: receive optical signals of a plurality of upstream wavelengths through the plurality of ports, couple the optical signals of the plurality of upstream wavelengths into a first upstream optical signal via the first optical coupler, and transmit the first upstream optical signal to the central optical module, where the plurality of upstream wavelengths include an upstream wavelength corresponding to at least one access-side optical module.

The first optical demultiplexer is configured to: obtain the first upstream optical signal, demultiplex the first upstream optical signal into the optical signals of the plurality of upstream wavelengths, and separately transmit an optical signal of an upstream wavelength corresponding to each access-side optical module to the plurality of photoelectric conversion submodules.

Each photoelectric conversion submodule is further configured to: convert the optical signal of the upstream wavelength corresponding to the photoelectric conversion submodule into a first upstream electrical signal, and transmit the first upstream electrical signal to the transceiver matching module.

The transceiver matching module is configured to match the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby.

It can be learned that, even if a plurality of access-side optical modules are intermixed, an upstream wavelength of an optical signal transmitted by each access-side optical module to the intermediate device may not match a downstream wavelength of a received optical signal. However, the intermediate device can still couple, via an optical coupler, optical signals of a plurality of upstream wavelengths received by a plurality of ports and then transmit the coupled optical signals to the central optical module. In this way, although an optical signal sent and an optical signal received by one or some photoelectric conversion submodules of the central optical module may not be optical signals related to a same access-side optical module, that is, a case in which transmitting and receiving of the plurality of photoelectric conversion submodules, the routing and switching device can determine, via the transceiver matching module, an optical signal sent and an optical signal received by a same access-side optical module, that is, implement transmitting and receiving matching, thereby ensuring reliability of optical communication.

The central optical module further includes a first optical multiplexer, the intermediate device further includes a second optical demultiplexer, the first optical multiplexer is separately connected to the plurality of photoelectric conversion submodules through optical fibers, and the second optical demultiplexer is separately connected to the plurality of ports through optical fibers.

The first optical multiplexer is configured to: combine the optical signals of the plurality of downstream wavelengths into a first downstream optical signal, and transmit the first downstream optical signal to the second optical demultiplexer.

The second optical demultiplexer is configured to: receive a second downstream optical signal, demultiplex the first downstream optical signal into the optical signals of the plurality of downstream wavelengths, and separately transmit an optical signal of a downstream wavelength corresponding to each port to the plurality of ports, where the second downstream optical signal is an optical signal obtained by transmitting the first downstream optical signal through the optical fiber between the central optical module and the intermediate device.

In a possible implementation, the intermediate device further includes a first beamsplitter, the central optical module further includes a second beamsplitter, the first beamsplitter is separately connected to the second optical demultiplexer, the first optical coupler, and the second beamsplitter through optical fibers, and the second beamsplitter is further separately connected to the first optical multiplexer and the first optical demultiplexer through optical fibers.

The first beamsplitter is configured to: receive the first upstream optical signal transmitted by the first optical coupler, transmit the first upstream optical signal to the second beamsplitter, receive the first downstream optical signal transmitted by the second beamsplitter, to obtain the second upstream optical signal, and transmit the second downstream optical signal to the second optical demultiplexer.

The second beamsplitter is configured to: obtain the first downstream optical signal transmitted by the first optical multiplexer, transmit the first downstream optical signal to the first beamsplitter, obtain the first upstream optical signal transmitted by the first beamsplitter, to obtain a second upstream optical signal, and transmit the second upstream optical signal to the first optical demultiplexer.

In this way, communication between the intermediate device and the central optical module can be implemented through connection with one optical cable, that is, communication is implemented through a single fiber.

Alternatively, the first optical multiplexer is connected to the second optical demultiplexer, the first optical coupler is connected to the first optical demultiplexer, the first optical multiplexer is configured to transmit a first downstream optical signal to the second optical demultiplexer, and the first optical coupler is configured to transmit a first upstream optical signal to the first optical demultiplexer. In this way, communication between the intermediate device and the central optical module can be implemented through connection with two optical cables, that is, communication is implemented through dual fibers.

The access-side optical module is inserted into an access device, or the access-side optical module is integrated in an access device, and the access device is configured to access the optical communication system via the access-side optical module.

According to a seventh aspect, an optical communication method is provided, and is applied to a first optical module in a plurality of access-side optical modules included in an optical communication system. The optical communication system further includes an intermediate device and a routing and switching device, the routing and switching device is connected to the intermediate device through an optical fiber, the intermediate device includes a plurality of ports, and the first optical module is connected to a first port in the plurality of ports through an optical fiber, where the first port is any one of the plurality of ports, each port corresponds to a downstream wavelength, different ports correspond to different downstream wavelengths, the first port corresponds to a first downstream wavelength, the downstream wavelength further matches an upstream wavelength, and different downstream wavelengths match different upstream wavelengths; the first optical module corresponds to a first upstream wavelength, and the first upstream wavelength does not match the first downstream wavelength; and the method includes:
receiving an optical signal of the first downstream wavelength transmitted by the first port; and
transmitting an optical signal of the first upstream wavelength to the first port, to transmit the optical signal of the first upstream wavelength to the routing and switching device via the intermediate device, where the routing and switching device is configured to match, for a same access-side optical module, an optical signal of a downstream wavelength received thereby with an optical signal of an upstream wavelength sent thereby.

According to an eighth aspect, an optical communication method is provided, and is applied to an intermediate device in an optical communication system. The optical communication system further includes a routing and switching device and a plurality of access-side optical modules, the routing and switching device is connected to the intermediate device through an optical fiber, the intermediate device includes a first optical coupler and a plurality of ports, the first optical coupler is separately connected to the plurality of ports through optical fibers, each access-side optical module is connected to any port through an optical fiber, different access-side optical modules are connected to different ports, each port corresponds to a downstream wavelength, different ports correspond to different downstream wavelengths, each downstream wavelength further matches an upstream wavelength, different downstream wavelengths match different upstream wavelengths, each access-side optical module corresponds to an upstream wavelength, and different access-side optical modules correspond to different upstream wavelengths; and the method includes:
obtaining optical signals of a plurality of downstream wavelengths transmitted by the routing and switching device, where the plurality of downstream wavelengths include a downstream wavelength corresponding to at least one port;
transmitting, through each of the plurality of ports, an optical signal of a downstream wavelength corresponding to the port to an access-side optical module connected to the port, and receiving, through the plurality of ports, an optical signal of an upstream wavelength transmitted by the access-side optical module, where for a same port in the plurality of ports, a downstream wavelength of an optical signal sent thereby does not match an upstream wavelength of an optical signal received thereby;
coupling, via the first optical coupler, optical signals of a plurality of upstream wavelengths received through the plurality of ports into a first upstream optical signal; and
transmitting the first upstream optical signal to the routing and switching device, where the routing and switching device is configured to determine, for a same access-side optical module by matching the optical signals of the plurality of upstream wavelengths with the optical signals of the plurality of downstream wavelengths, an optical signal of an upstream wavelength sent thereby and an optical signal of a downstream wavelength received thereby.

According to a ninth aspect, an optical communication method is provided, and is applied to a routing and switching device in an optical communication system, where the routing and switching device is inserted with a central optical module or is integrated with a central optical module; the optical communication system further includes an intermediate device and a plurality of access-side optical modules, where the central optical module is connected to the intermediate device through an optical fiber, the routing and switching device further includes a transceiver matching module, and the central optical module includes a first optical demultiplexer and a plurality of photoelectric conversion submodules, where the first optical demultiplexer is separately connected to the plurality of photoelectric conversion submodules through optical fibers, each photoelectric conversion submodule corresponds to one upstream wavelength and one downstream wavelength that have a matching relationship, and different photoelectric conversion submodules correspond to different upstream wavelengths and different downstream wavelengths; the intermediate device includes a plurality of ports, each of the plurality of access-side optical modules is connected to any one of the plurality of ports through an optical fiber, different access-side optical modules are connected to different ports, each port corresponds to a downstream wavelength, different ports correspond to different downstream wavelengths, each access-side optical module corresponds to an upstream wavelength, and different access-side optical modules correspond to different upstream wavelengths; and the method includes:

Each of the plurality of photoelectric conversion submodules obtains a first downstream electrical signal transmitted by the routing and switching device, converts the obtained first downstream electrical signal into an optical signal of a downstream wavelength corresponding to the photoelectric conversion submodule, and transmits the optical signal of the downstream wavelength to the intermediate device;
each photoelectric conversion submodule receives an optical signal that is of an upstream wavelength corresponding to the photoelectric conversion submodule and that is transmitted by the intermediate device, converts the optical signal of the upstream wavelength corresponding to the photoelectric conversion submodule into a first upstream electrical signal, and transmits the first upstream electrical signal to the transceiver matching module; and
the transceiver matching module matches the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby.

According to a tenth aspect, a communication apparatus is provided. The communication apparatus has a function of implementing behavior of the optical communication method in the seventh aspect, the eighth aspect, or the ninth aspect. The communication apparatus includes one or more modules, and the one or more modules are configured to implement the optical communication method provided in the seventh aspect, the eighth aspect, or the ninth aspect.

According to an eleventh aspect, a communication device is provided. The communication device includes a processor and a memory, and the memory is configured to store a program for performing the optical communication method provided in the second aspect, the third aspect, the fourth aspect, the seventh aspect, the eighth aspect, or the ninth aspect, and store data used to implement the optical communication method provided in the second aspect, the third aspect, the fourth aspect, the seventh aspect, the eighth aspect, or the ninth aspect. The processor is configured to execute the program stored in the memory. The communication device may further include a communication bus, and the communication bus is configured to establish a connection between the processor and the memory.

According to a twelfth aspect, a computer-readable storage medium is provided, where the computer-readable storage medium stores instructions. When the instructions are run on a computer, the computer is enabled to perform the optical communication method according to the second aspect, the third aspect, the fourth aspect, the seventh aspect, the eighth aspect, or the ninth aspect.

According to a thirteenth aspect, a computer program product including instructions is provided. When the computer program product runs on a computer, the computer is enabled to perform the optical communication method according to the second aspect, the third aspect, the fourth aspect, the seventh aspect, the eighth aspect, or the ninth aspect.

Technical effects obtained in the second aspect to the fourth aspect are similar to technical effects obtained through corresponding technical means in the first aspect. Details are not described herein again. Technical effects obtained in the sixth aspect to the thirteenth aspect are similar to technical effects obtained through a corresponding technical means in the fifth aspect. Details are not described herein again.

### BRIEF DESCRIPTION OF DRAWINGS

FIG. 1 is a diagram of an architecture of an optical communication system according to an embodiment of this application;
FIG. 2 is a diagram of an architecture of another optical communication system according to an embodiment of this application;
FIG. 3 is a diagram of an architecture of still another optical communication system according to an embodiment of this application;
FIG. 4 is a diagram of an architecture of still another optical communication system according to an embodiment of this application;
FIG. 5 is a diagram of an architecture of still another optical communication system according to an embodiment of this application;
FIG. 6 is a diagram of an architecture of still another optical communication system according to an embodiment of this application;
FIG. 7 is a flowchart of an optical communication method according to an embodiment of this application;
FIG. 8 is a flowchart of another optical communication method according to an embodiment of this application;
FIG. 9 is a flowchart of still another optical communication method according to an embodiment of this application;
FIG. 10 is a diagram of a structure of a communication device according to an embodiment of this application;
FIG. 11 is a diagram of a structure of another communication device according to an embodiment of this application; and
FIG. 12 is a diagram of a structure of still another communication device according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, some terms mentioned in embodiments of this application are first described.

Wavelength division multiplexing is abbreviated as wavelength division, and usually uses a plurality of wavelengths to implement a plurality of tasks. Wavelength division multiplexing is a data transmission technology. In an optical communication system, different optical signals are carried by different colors (that is, wavelengths or frequencies), and a plurality of optical signals of different wavelengths are multiplexed on one optical fiber for transmission. The optical communication system and method provided in embodiments of this application are applied to a wavelength division system, to resolve a problem that access-side optical modules cannot be intermixed in a wavelength division system in a related technology.

Point to multi-point (point to multi-point, P2MP) is a transmission mode in which data is transmitted from a source to one or more receivers.

As an emerging broadband access fiber optic technology covering the last mile, a passive optical network (passive optical network, PON) does not require any node device at an optical branching point. Instead, only a simple optical splitter needs to be installed. Therefore, the passive optical network has advantages of saving optical cable resources, sharing bandwidth resources, saving equipment room investment, providing high device security, enabling fast network construction, and reducing overall network construction cost. The intermediate device in embodiments of this application is a passive device, and may be applied to a passive optical network.

The following describes the background of embodiments of this application.

Embodiments of this application are designed for evolution of a campus network architecture, but are not limited to being applied to a campus network. The requirements of this solution are triggered by the evolution from a campus network to an all-optical campus network. Therefore, embodiments of this application will be described in accordance with the evolution of the campus architecture and the line of thinking of this solution.

First, an architecture of a conventional campus network, what drives the evolution of the campus network architecture, and an evolution direction are described.

In the conventional campus network, tree networking is used. The most typical tree architecture is three-layer networking. The three layers are an access layer, an aggregation layer, and a core layer. In the conventional structure, the access layer directly connects network cables to network-using devices (also referred to as user equipment, such as a personal computer (personal computer, PC)/a Wi-Fi device), and the aggregation layer completes northbound-southbound data aggregation and eastbound-westbound data exchange. In the access layer, downward (that is, toward the network-using devices) connections are primarily achieved through twisted-pair network cables. The connections, from the access layer to the aggregation layer and from the aggregation layer to the core layer, are usually realized through optical fibers. All layers are connected in point-to-point (point to point, P2P) mode. No convergence is performed on optical fibers or network cables. Data convergence and exchange are implemented only on switches.

The three-layer structure varies depending on a campus type and a specific location.

In a large campus, networks are usually constructed by building. A core switching area (that is, the core layer) is set for the entire campus. Each building may be networked based on a two-layer tree structure, that is, each building functions as a separate aggregation point. When this tree architecture is used for a large campus, data exchange in a same building is completed within the building, and data exchange between different buildings is completed via the core layer.

A two-layer structure is usually used for a medium-sized campus network, and a three-layer structure can also be used based on a network scale and a service requirement. When there are many network access points and a plurality of aggregation points need to be set, the three-layer structure can be used. For example, in a newly constructed office building, each floor has a telecommunication room that can serve as an aggregation point. A three-layer structure may be adopted for the entire building and one core layer is set up. When there are different service isolation requirements, for example, when different departments need to be isolated from one another, and when a separate aggregation point needs to be set up for each type of service or each department, a three-layer structure may be adopted.

The previous section briefly describes the conventional three-layer architecture of the campus network. Next, a next-generation campus architecture (that is, all-optical campus architecture) will be introduced. Currently, exploration of an all-optical campus in related fields is mainly divided into two systems: a passive optical local area network (passive optical LAN, POL) system based on a PON technology and an all-optical Ethernet system based on a conventional Ethernet solution. Both systems have their respective advantages and disadvantages. This solution mainly integrates these two systems to achieve deep integration of internet protocol (Internet protocol, IP) and optical technologies.

POL is a local area network based on a PON technology, and provides users with converged data, voice, video, and other weak-current services through optical fibers. POL is a solution that directly applies the PON technology of access networks to campus networks. The application of the POL solution in a campus network is described by using the conventional three-layer campus network as an example. The POL solution replaces the access layer and the aggregation layer, deploys an optical line termination (optical line termination, OLT) device and a core layer switch together, and uses passive optical splitters and optical fibers to implement P2MP connections. Compared with the conventional solution, the POL solution may simplify a network architecture and changes a three-layer network to a two-layer network. In addition, because an OLT device and an optical network unit (optical network unit, ONU) of user equipment are placed at both ends of a network, an intermediate link can be completely passive, which reduces a quantity of devices to be maintained and reduces power consumption of the devices. In addition, the P2MP design further greatly reduces use of optical fibers and reduces device deployment space.

The application of PON technologies in the all-optical campus network also triggers evolution of the conventional Ethernet in an all-optical direction. The conventional campus network solution faces the following problems: no optical fibers are directly connected to rooms, there are many network layers, there are a large quantity of optical fibers and network cables, and there are active devices on interconnection links. To solve the foregoing problems, exploration of an Ethernet all-optical campus has been launched.

In a fiber-to-the-home scenario, after miniaturizing and functionally simplifying a user-side switch, a box-type access switch is obtained. For example, a 24-port box-type access switch can be placed directly on a user's desktop to form a 4-port or 8-port desktop switch, thereby achieving direct fiber pulling.

It can be learned from the foregoing descriptions that embodiments of this application are mainly applied to a wavelength division system. In a current wavelength division solution, an access-side optical module needs to match a port of an optical multiplexer/demultiplexer, that is, the access-side optical module and the port of the optical multiplexer/demultiplexer cannot be intermixed. For example, an optical fiber connected to an access-side optical module 1 needs to be inserted into a port 1 of an optical multiplexer/demultiplexer, and cannot be inserted into another port. However, an access device is usually located in a user room, and an optical multiplexer/demultiplexer may be located in a central equipment room of a building, making them far apart from each other. Therefore, a plurality of attempts may be required to correctly connect optical fibers connected to a plurality of access-side optical modules, which is time-consuming and labor-consuming. In addition, the plurality of access-side optical modules require multiple different codes, so that different codes correspond to different upstream and downstream wavelengths.

Embodiments of this application can enable mixed insertion or optical module normalization of distributed colored optical modules (that is, access-side optical modules) in a wavelength division multiplexing system, thereby improving networking flexibility of optical communication and reducing difficulty of device management and maintenance.

The following describes implementation environments of embodiments of this application.

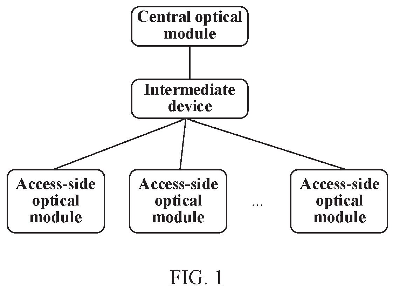

FIG. 1 is a diagram of an architecture of an optical communication system according to an embodiment of this application. Refer to FIG. 1. The system includes a central optical module, an intermediate device, and a plurality of access-side optical modules. The central optical module is connected to the intermediate device through an optical fiber. The intermediate device includes a plurality of ports. Each access-side optical module is connected to any port of the intermediate device through an optical fiber. Different access-side optical modules are connected to different ports.

The plurality of access-side optical modules can be intermixed into the plurality of ports, without needing to pay attention to a correspondence between the ports, the access-side optical modules, and upstream and downstream wavelengths. That is, each access-side optical module can be connected to any port.

In this embodiment of this application, the access-side optical module is inserted into an access device, or the access-side optical module is integrated in an access device, and the access device is configured to access the optical communication system via the access-side optical module. Similarly, the central optical module is inserted into a routing and switching device, or the central optical module is integrated in a routing and switching device, and the routing and switching device is configured to communicate with the access device via the central optical module.

The access device may be an asteroid, an access point (access point, AP), or another device in the industry. The access device may also be referred to as an optical access device, an optical line termination, or another name. The routing and switching device may be a switch (for example, a local area network switch (local area network switch, LSW)) or a router. The routing and switching device may also be referred to as a central switch, a core switch, or another name. The central optical module may also be referred to as a core-side optical module or a central office-side optical module. The access-side optical module may also be referred to as a terminal optical module.

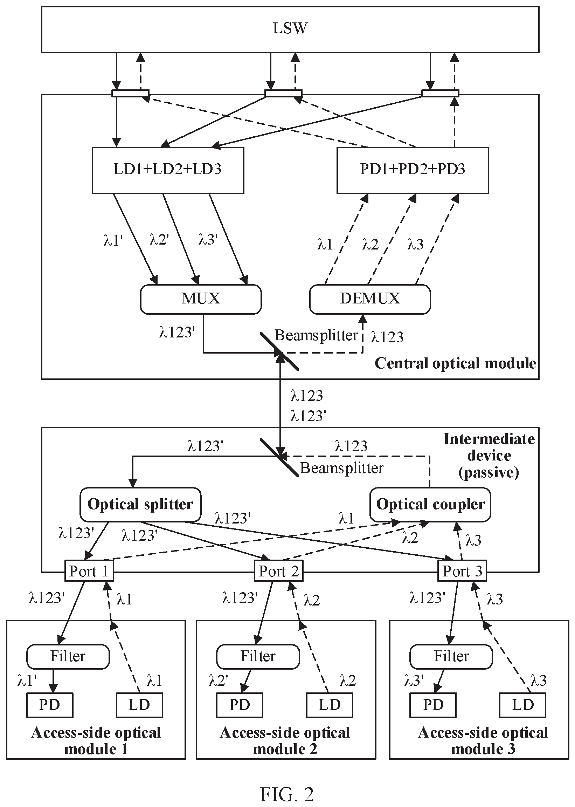

The central optical module, the intermediate device, and the plurality of access-side optical modules are configured to perform optical communication according to the optical communication method provided in embodiments of this application, that is, transmit upstream and downstream information by using optical signals. To allow for intermixture of optical modules, embodiments of this application provide a plurality of specific implementations. The following describes the plurality of specific implementations with reference to FIG. 2 to FIG. 6.

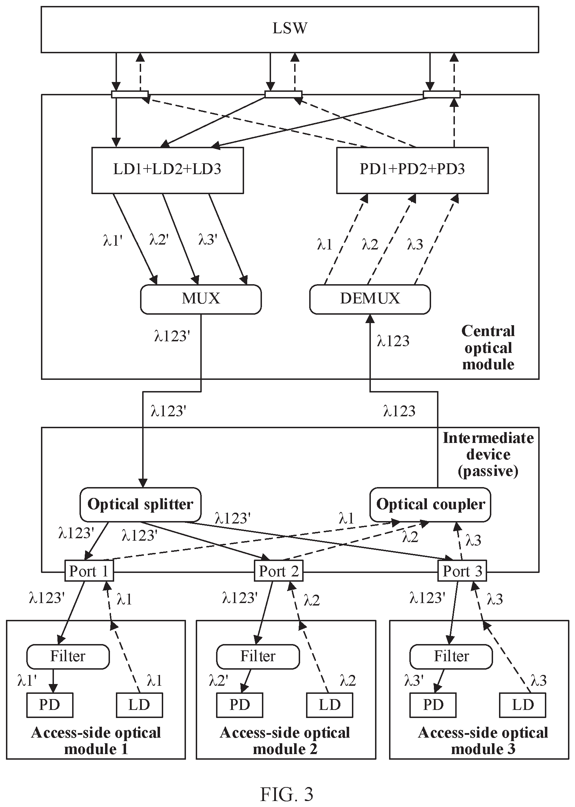

FIG. 2 and FIG. 3 are diagrams of architectures of two other optical communication systems according to embodiments of this application. With reference to FIG. 2 and FIG. 3, the following describes specific processes of transmitting downstream information and transmitting upstream information in a first specific implementation.

First, the specific process of transmitting downstream information is described.

In a wavelength division system, downstream information is transmitted by using an optical signal of a downstream wavelength, each access-side optical module corresponds to a downstream wavelength, and different access-side optical modules correspond to different downstream wavelengths. For example, if the system includes eight access-side optical modules, the eight access-side optical modules are in one-to-one correspondence with eight different downstream wavelengths.

In the downstream information transmission process, the central optical module is configured to transmit a first downstream optical signal to the intermediate device, where the first downstream optical signal has a plurality of downstream wavelengths, and the plurality of downstream wavelengths include a downstream wavelength corresponding to at least one access-side optical module. The first downstream optical signal carries downstream information to be transmitted to at least one access device. The intermediate device is configured to: receive a second downstream optical signal, split the second downstream optical signal into a plurality of third downstream optical signals, and transmit, through each of the plurality of ports, a third downstream optical signal to an access-side optical module connected to the port, where each of the plurality of third downstream optical signals has the plurality of downstream wavelengths and also carries the downstream information to be transmitted to the at least one access device. Each of the plurality of access-side optical modules is configured to obtain, from a received fourth downstream optical signal, an optical signal of a downstream wavelength corresponding to the access-side optical module. The plurality of access devices are access devices to which the plurality of access-side optical modules belong. The second downstream optical signal is an optical signal obtained by transmitting the first downstream optical signal through an optical fiber between the central optical module and the intermediate device. The fourth downstream optical signal is an optical signal obtained by transmitting the third downstream optical signal through an optical fiber between the access-side optical module and the port.

It should be understood that, due to a loss of an optical signal in a transmission process through a long-distance optical fiber, an optical signal sent by the central optical module is actually not completely the same as an optical signal received by the intermediate device, and an optical signal sent by the intermediate device is not completely the same as an optical signal received by the access-side optical module. Based on this, in this embodiment of this application, words such as "first", "second", "third", and "fourth" are used to distinguish between a sent optical signal and a received optical signal. Simply speaking, the first downstream optical signal becomes the second downstream optical signal due to a loss after being transmitted through the optical fiber, and the third downstream optical signal becomes the fourth downstream optical signal due to damage after being transmitted through the optical fiber.

Both the first downstream optical signal and the second downstream optical signal are a composite optical signal (for example, a colored optical signal). The intermediate device splits the received composite optical signal into a plurality of composite optical signals, to transmit a composite optical signal having a plurality of downstream wavelengths to the plurality of access-side optical modules. In this way, even if the plurality of access-side optical modules are intermixed, the plurality of access-side optical modules can obtain an optical signal of a corresponding downstream wavelength from the received composite optical signal. Therefore, all the foregoing plurality of access devices can obtain corresponding downstream information from the optical signal of the corresponding downstream wavelength, thereby ensuring communication reliability.

The at least one access-side optical module includes an access-side optical module that is currently performing communication. For example, if all access-side optical modules in the optical communication system are currently performing communication, the at least one access-side optical module includes all the access-side optical modules in the optical communication system. The at least one port below is similar.

The central optical module includes a first optical multiplexer, and the intermediate device further includes a first optical splitter. The first optical splitter is separately connected to the foregoing plurality of ports through optical fibers. The first optical multiplexer is configured to: obtain optical signals of the foregoing plurality of downstream wavelengths, combine the optical signals of the foregoing plurality of downstream wavelengths into the first downstream optical signal, and transmit the first downstream optical signal to the first optical splitter. The first optical splitter is configured to: receive the second downstream optical signal, split the second downstream optical signal into the foregoing plurality of third downstream optical signals in an energy division manner, and transmit a third downstream optical signal to each of the plurality of ports.

That is, the first optical multiplexer can combine a plurality of input signals of different wavelengths into one signal. In this embodiment of this application, the first optical multiplexer has a plurality of input ends and one output end. The plurality of input ends are in one-to-one correspondence with the plurality of downstream wavelengths. Each input end is configured to receive an optical signal of a downstream wavelength corresponding to the input end, and the output end is configured to output the combined first downstream optical signal.

Refer to FIG. 2 and FIG. 3. The first optical multiplexer may be implemented by a multiplexer (multiplexer, MUX), or may be implemented by another component having a similar function. This is not limited in this embodiment of this application.

The first optical splitter can split one signal into a plurality of signals in an energy division manner. For example, the first optical splitter has one input end and a plurality of output ends. The plurality of output ends are connected to the plurality of ports in a one-to-one manner. The input end is configured to receive the second downstream optical signal, and the plurality of output ends are configured to separately output one third downstream optical signal.

In a possible implementation, the first optical splitter splits the second downstream optical signal into the plurality of third downstream optical signals in an energy-equalizing manner, where the plurality of third downstream optical signals have equal energy. Alternatively, the first optical splitter may not evenly allocate energy of the second downstream optical signal, but allocate the energy based on another proportion. In other words, energy of the plurality of obtained third downstream optical signals may be different. This is not limited in this embodiment of this application. When the intermediate device is a passive device, a sum of the energy of the plurality of third downstream optical signals does not exceed the energy of the second downstream optical signal. When the intermediate device is an active device, a sum of the energy of the plurality of third downstream optical signals may exceed the energy of the second downstream optical signal. For example, the intermediate device further includes an energy amplifier, and the energy amplifier is used to make the sum of energy of the plurality of third downstream optical signals exceed the energy of the second downstream optical signal, thereby improving quality of the third downstream optical signal.

The first optical splitter may be implemented by one optical splitter, or may be implemented by another component having a similar function. This is not limited in this embodiment of this application.

In a possible implementation, the central optical module further includes a plurality of photoelectric conversion submodules, the first optical multiplexer is separately connected to the plurality of photoelectric conversion submodules through optical fibers, the photoelectric conversion submodule corresponds to one upstream wavelength and one downstream wavelength that have a matching relationship, and different photoelectric conversion submodules correspond to different upstream wavelengths and different downstream wavelengths. Each photoelectric conversion submodule is configured to: obtain a first downstream electrical signal transmitted by a routing and switching device (an LSW shown in FIG. 2 and FIG. 3), convert the first downstream electrical signal into an optical signal of a downstream wavelength corresponding to the photoelectric conversion submodule, and transmit the optical signal of the downstream wavelength corresponding to the photoelectric conversion submodule to the first optical multiplexer. The first optical multiplexer is configured to obtain optical signals of a plurality of downstream wavelengths transmitted by the plurality of photoelectric conversion submodules. The first downstream electrical signal carries downstream information.

Each of the plurality of photoelectric conversion submodules includes a photo diode (photo diode, PD) and a laser diode (laser diode, LD). Refer to FIG. 2 and FIG. 3. For example, the central optical module includes three photoelectric conversion submodules. A first photoelectric conversion submodule includes an LD1 and a PD1, a second photoelectric conversion submodule includes an LD2 and a PD2, and a third photoelectric conversion submodule includes an LD3 and a PD3. In some other embodiments, the photoelectric conversion submodule may also be represented by O/E(E/O), where 'O' represents an abbreviation of optical (optical), and 'E' represents an abbreviation of electrical (electricity). Each photoelectric conversion submodule is configured to perform photoelectric conversion on a received optical signal.

It should be understood that, the LD1, the LD2, and the LD3 are drawn in one frame in the figure, which does not mean that physical locations of the LD1, the LD2, and the LD3 need to be together. Similarly, the PD1, the PD2, and the PD3 are drawn in one frame, which does not mean that physical locations of the PD1, the PD2, and the PD3 need to be together. The physical locations of these components may be set based on an actual situation. This is not limited in this embodiment of this application. For example, the LD1 and the PD1 may be disposed together, the LD2 and the PD2 may be disposed together, and the LD3 and the PD3 may be disposed together. The same principle applies to similar parts in the figures of subsequent embodiments are also the same, which are not described again below.

In a possible implementation, refer to FIG. 2. The intermediate device further includes a beamsplitter, where the beamsplitter is referred to as a first beamsplitter, the central optical module also further includes a beamsplitter, the beamsplitter is referred to as a second beamsplitter, the first beamsplitter is separately connected to the second beamsplitter and the first optical splitter through optical fibers, and the second beamsplitter is further connected to the first optical multiplexer through an optical fiber. The first optical multiplexer is further configured to transmit the first downstream optical signal to the second beamsplitter. The second beamsplitter is configured to transmit the first downstream optical signal to the first beamsplitter. The first beamsplitter is configured to: receive the second downstream optical signal, and transmit the second downstream optical signal to the first optical splitter.

It should be understood that, for ease of understanding and for simplicity and clarity, because a loss of an optical signal during transmission in a same apparatus is very small and can be almost negligible, in this embodiment of this application, naming of an optical signal in a same apparatus is simplified, and optical signals sent and received between different modules in a same apparatus are named as a same optical signal without misunderstanding. For example, both the optical signal sent by the first beamsplitter to the first optical splitter and the optical signal received by the first optical splitter are referred to as the second downstream optical signal. Actually, because there is a loss in optical fiber transmission, an optical signal sent by a module may be different from an optical signal received by a peer module. For example, the second downstream optical signal sent by the first beamsplitter to the first optical splitter may be different from the second downstream optical signal received by the first optical splitter.

Alternatively, refer to FIG. 3. The first optical multiplexer of the central optical module is directly connected to the first optical splitter of the intermediate device through an optical fiber, and the first optical multiplexer is further configured to transmit the first downstream optical signal to the first optical splitter.

Refer to FIG. 2 and FIG. 3. The access-side optical module includes a first filter, and the first filter is configured to filter the received fourth downstream optical signal, to obtain the optical signal of the downstream wavelength corresponding to the access-side optical module. That is, each access-side optical module filters, by using a filter, a received composite optical signal having a plurality of downstream wavelengths, to obtain an optical signal of a downstream wavelength corresponding to the access-side optical module.

Refer to FIG. 2 and FIG. 3. The access-side optical module further includes a PD, where the PD is connected to the first filter through an optical fiber. The first filter is further configured to transmit the optical signal of the downstream wavelength corresponding to the access-side optical module to the PD. The PD is configured to: perform photoelectric conversion on the received optical signal of the downstream wavelength to obtain a second downstream electrical signal, and transmit the second downstream electrical signal to another module of the access device, so that the another module of the access device obtains corresponding downstream information from the second downstream electrical signal, or transmits the second downstream electrical signal to a user terminal connected to the access device.

Alternatively, the access-side optical module includes a second optical demultiplexer, and the second optical demultiplexer is configured to: demultiplex a third downstream optical signal transmitted by the port, to obtain optical signals of a plurality of downstream wavelengths, and determine, from the optical signals of the plurality of downstream wavelengths, an optical signal of a downstream wavelength corresponding to the access-side optical module. In other words, the first filter may be replaced with the second optical demultiplexer. The second optical demultiplexer is connected to the PD, and is further configured to transmit, to the PD, the optical signal of the downstream wavelength corresponding to the access-side optical module.

The foregoing describes the downstream information transmission process, and the following describes the upstream information transmission process.

In a wavelength division system, upstream information is transmitted by using an optical signal of an upstream wavelength. Each access-side optical module further corresponds to an upstream wavelength, and different access-side optical modules correspond to different upstream wavelengths. For example, if the system includes eight access-side optical modules, the eight access-side optical modules correspond to eight different upstream wavelengths. In this embodiment of this application, the upstream wavelength is different from the downstream wavelength. For example, the upstream wavelength is greater than the downstream wavelength, or the upstream wavelength is less than the downstream wavelength. In this way, upstream and downstream signals are transmitted in one optical cable, and networking is simple.

In the upstream information transmission process, each of the plurality of access-side optical modules is further configured to transmit, to the connected port, an optical signal of an upstream wavelength corresponding to the access-side optical module. The intermediate device is further configured to: obtain, through the plurality of ports, optical signals of a plurality of upstream wavelengths transmitted by the plurality of access-side optical modules, combine the optical signals of the plurality of upstream wavelengths into a first upstream optical signal, and transmit the first upstream optical signal to the central optical module. The central optical module is further configured to demultiplex the first upstream optical signal into the optical signals of the plurality of upstream wavelengths. An optical signal of each upstream wavelength carries upstream information transmitted by a corresponding access device, and the first upstream optical signal carries upstream information transmitted by the foregoing plurality of access devices. In other words, the optical signal of the upstream wavelength transmitted by the access-side optical module is a single-wavelength signal (that is, a gray optical signal), and the first upstream optical signal is a composite optical signal.

In a possible implementation, the access-side optical module further includes a first laser, and the first laser is connected to the port through an optical fiber; and the first laser is configured to: generate an optical signal of an upstream wavelength corresponding to the access-side optical module, and transmit the optical signal of the upstream wavelength to the connected port.

The first laser is a single-wavelength laser, that is, a single-frequency laser, or the first laser is a wavelength-tunable laser. Refer to FIG. 2 and FIG. 3. The first laser includes an LD. The LD is a single-frequency laser, and can generate gray light with a unique frequency (that is, an optical signal of a unique wavelength). Alternatively, the LD is a wavelength-tunable laser, and can generate optical signals of a plurality of wavelengths. In this embodiment of this application, the LD is configured to generate the optical signal of the upstream wavelength corresponding to the access-side optical module.

In a possible implementation, refer to FIG. 2 and FIG. 3. The intermediate device further includes an optical coupler. The optical coupler is referred to as a first optical coupler. The central optical module includes an optical demultiplexer. The optical demultiplexer is referred to as a first optical demultiplexer. The first optical coupler is separately connected to the plurality of ports through optical fibers. The first optical coupler is configured to couple the optical signals of the plurality of upstream wavelengths into the first upstream optical signal in an energy combination manner. The first optical demultiplexer is configured to demultiplex the first upstream optical signal into the optical signals of the plurality of upstream wavelengths.

That is, the first optical coupler can couple a plurality of input signals into one signal. In this embodiment of this application, the first optical coupler has a plurality of input ends and one output end. Each of the plurality of input ends can receive an optical signal of any wavelength, and the output end is configured to output the first upstream optical signal obtained through coupling. It can be learned that a function of the optical coupler is opposite to that of the optical splitter.

The first optical coupler may be implemented by one optical coupling, or may be implemented by another component having a similar function. This is not limited in this embodiment of this application. In this embodiment of this application, the optical coupler and the optical splitter may be a same component, that is, the component has both functions of optical splitting and optical coupling. Certainly, in some other embodiments, the optical coupler and the optical splitter may also be different components.

The first optical demultiplexer can split one signal into a plurality of signals of different wavelengths based on wavelengths. For example, the first optical demultiplexer has one input end and a plurality of output ends. The plurality of output ends are in one-to-one correspondence with the plurality of upstream wavelengths, and each output end is connected to one of the plurality of photoelectric conversion submodules based on a corresponding upstream wavelength. That is, an upstream wavelength corresponding to each output end is the same as an upstream wavelength corresponding to the connected photoelectric conversion submodule. The input end of the first optical demultiplexer is configured to receive the first upstream optical signal, and the plurality of output ends are configured to output an optical signal of a corresponding upstream wavelength to the connected photoelectric conversion submodule.

Refer to FIG. 2 and FIG. 3. The first optical demultiplexer may be implemented by a demultiplexer (demultiplexer, DEMUX), or may be implemented by another component having a similar function. This is not limited in this embodiment of this application.

Each photoelectric conversion submodule is configured to: after receiving an optical signal of an upstream wavelength corresponding to the photoelectric conversion submodule, convert the received optical signal into a first upstream electrical signal, and transmit the first upstream electrical signal to another module of the routing and switching device, so that the routing and switching device obtains corresponding upstream information from the first upstream electrical signal, or performs other processing on the first upstream electrical signal, for example, transmits the first upstream electrical signal to another network device.

It can be learned from the foregoing descriptions that, in an implementation, as shown in FIG. 2, the intermediate device further includes a first beamsplitter, and the central optical module further includes a second beamsplitter. In a possible implementation, the first beamsplitter is further connected to the first optical coupler through an optical fiber, and the second beamsplitter is further connected to the first optical demultiplexer through an optical fiber. The first optical coupler is further configured to transmit the first upstream optical signal to the first beamsplitter. The first beamsplitter is configured to transmit the first upstream optical signal to the first second beamsplitter. The second beamsplitter is configured to transmit the first upstream optical signal to the first optical demultiplexer.

In another implementation, as shown in FIG. 3, the first optical demultiplexer of the central optical module is directly connected to the first optical coupler of the intermediate device through an optical fiber, and the first optical coupler is configured to transmit the first upstream optical signal to the first optical demultiplexer.

With reference to both upstream and downstream directions, when the intermediate device includes the first beamsplitter and the central optical module includes the second beamsplitter, communication can be implemented by connecting the first beamsplitter and the second beamsplitter between the intermediate device and the central optical module through an optical cable. Therefore, networking is simpler. When the first optical multiplexer of the central optical module is directly connected to the first optical splitter of the intermediate device through an optical fiber, and the first optical demultiplexer of the central optical module is directly connected to the first optical coupler of the intermediate device through an optical fiber, communication can also be implemented between the intermediate device and the central optical module through two optical cables.

It should be noted that, the first beamsplitter and the second beamsplitter may filter an upstream optical signal and a downstream optical signal based on a difference between upstream and downstream wavelengths. For example, if the upstream wavelength is greater than a first threshold, and the downstream wavelength is less than the first threshold, the first beamsplitter may use an optical signal whose wavelength is greater than the first threshold as an upstream optical signal, transmit the upstream optical signal to the central optical module, use an optical signal whose wavelength is less than the first threshold as a downstream optical signal, and transmit the downstream optical signal to the first optical splitter.

With reference to FIG. 2 and FIG. 3, in the foregoing first specific implementation, a plurality of access-side optical modules can be intermixed, and the intermediate device can be passive. This optical networking manner is more flexible, and difficulty in device management and maintenance is reduced.

In a possible implementation, each of the plurality of ports of the intermediate device is implemented by one physical port, and the physical port not only can receive an optical signal of the access-side optical module but also can send an optical signal to the access-side optical module. Alternatively, each of the plurality of ports is implemented by a pair of physical ports, and the pair of physical ports includes an upstream port and a downstream port, where the upstream port is configured to receive an optical signal of the access-side optical module, and the downstream port is configured to send an optical signal to the access-side optical module. Regardless of whether each port of the intermediate device is implemented by one physical port or a pair of physical ports, each port is connected to the access-side optical module through two optical cables, to separately transmit an upstream optical signal and a downstream optical signal through the two optical cables.

For example, a quantity of the plurality of access-side optical modules is 8. The eight access-side optical modules can be intermixed into eight ports of the intermediate device. Each of the eight ports includes two physical ports. In this case, each of the eight access-side optical modules is connected to two physical ports included in one port through two optical cables.

It can be learned from the foregoing that, this solution can be applied to optical networking of a campus. A central switch of the campus serves as a routing and switching device, and usually includes a plurality of central optical modules. Each central optical module communicates with a plurality of access-side optical modules, so that a large-scale optical communication system is realized via the plurality of central optical modules. Each central optical module and a plurality of access-side optical modules connected to the central optical module can implement flexible networking based on the first specific implementation described above.

For example, the routing and switching device includes eight central optical modules. Each of the eight central optical modules is connected to eight access-side optical modules via the intermediate device. In this case, the routing and switching device can communicate with 64 access-side optical modules, and the eight access-side optical modules connected to each central optical module can be inserted into eight ports of the intermediate device connected to the central optical module. If the 64 access-side optical modules are divided into eight groups, the first specific implementation can implement intra-group mixed insertion of the optical modules. Each group includes eight access-side optical modules connected to one central optical module.

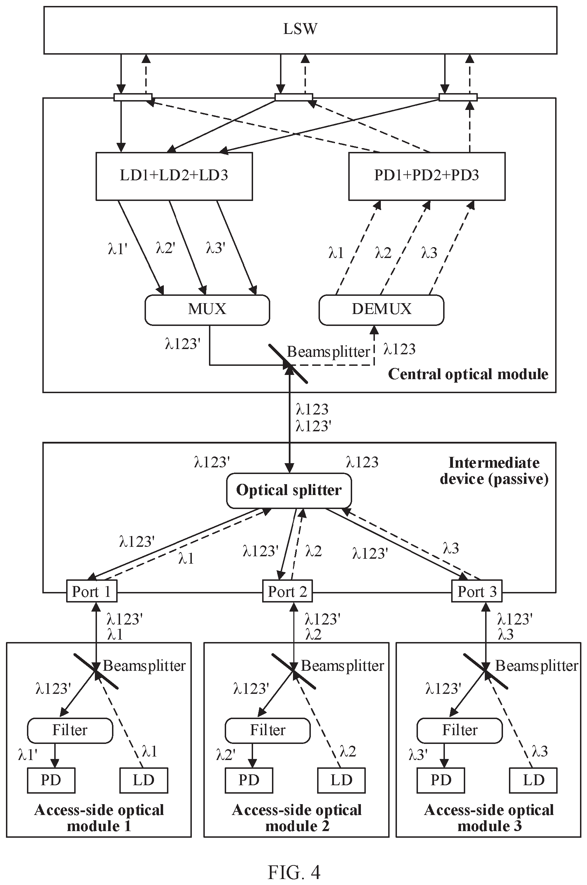

FIG. 4 is a diagram of an architecture of still another optical communication system according to an embodiment of this application. With reference to FIG. 4, the following describes specific processes of transmitting downstream information and transmitting upstream information in a second specific implementation.

First, the specific process of transmitting downstream information is described.

In a wavelength division system, downstream information is transmitted by using an optical signal of a downstream wavelength, each access-side optical module corresponds to a downstream wavelength, and different access-side optical modules correspond to different downstream wavelengths. For example, if the system includes eight access-side optical modules, the eight access-side optical modules are in one-to-one correspondence with eight different downstream wavelengths.

In the downstream information transmission process, the central optical module is configured to transmit a first downstream optical signal to the intermediate device, where the first downstream optical signal has a plurality of downstream wavelengths, and the plurality of downstream wavelengths include a downstream wavelength corresponding to at least one access-side optical module. The first downstream optical signal carries downstream information to be transmitted to at least one access device. The intermediate device is configured to: receive a second downstream optical signal, split the second downstream optical signal into a plurality of third downstream optical signals, and transmit, through each of the plurality of ports, a third downstream optical signal to an access-side optical module connected to the port, where each of the plurality of third downstream optical signals has the plurality of downstream wavelengths and also carries the downstream information to be transmitted to the at least one access device. Each of the plurality of access-side optical modules is configured to: receive a fourth downstream optical signal, and obtain, from the received fourth downstream optical signal, an optical signal of a downstream wavelength corresponding to the access-side optical module. The plurality of access devices are access devices to which the plurality of access-side optical modules belong. The second downstream optical signal is an optical signal obtained by transmitting the first downstream optical signal through an optical fiber between the central optical module and the intermediate device. The fourth downstream optical signal is an optical signal obtained by transmitting the third downstream optical signal through an optical fiber between the access-side optical module and the port.

In other words, both the first downstream optical signal and the second downstream optical signal are a composite optical signal. The intermediate device splits the received composite optical signal into a plurality of composite optical signals, to transmit a composite optical signal having a plurality of downstream wavelengths to the plurality of access-side optical modules. In this way, even if the plurality of access-side optical modules are intermixed, the plurality of access-side optical modules can obtain an optical signal of a corresponding downstream wavelength from the received composite optical signal. Therefore, all the foregoing plurality of access devices can obtain corresponding downstream information from the optical signal of the corresponding downstream wavelength, thereby ensuring communication reliability.

The central optical module includes a first optical multiplexer (a MUX shown in FIG. 4), and the intermediate device further includes a second optical splitter (the optical splitter shown in FIG. 4). The second optical splitter is separately connected to the plurality of ports through optical fibers, and the second optical splitter is further connected to the central optical module through an optical fiber. The first optical multiplexer is configured to obtain optical signals of the plurality of downstream wavelengths, and combine the optical signals of the plurality of downstream wavelengths into the first downstream optical signal. The second optical splitter is configured to: receive the second downstream optical signal, split the second downstream optical signal into the foregoing plurality of third downstream optical signals in an energy division manner, and transmit a third downstream optical signal to each of the plurality of ports.

A specific function and an implementation of the first optical multiplexer herein are the same as those of the first optical multiplexer in the foregoing first specific implementation. Details are not described herein again. A specific function and an implementation of the second optical splitter herein are similar to those of the first optical splitter in the foregoing first specific implementation. Details are not described herein again either.

In a possible implementation, the central optical module further includes a plurality of photoelectric conversion submodules, the first optical multiplexer is separately connected to the plurality of photoelectric conversion submodules through optical fibers, the photoelectric conversion submodule corresponds to one upstream wavelength and one downstream wavelength that have a matching relationship, and different photoelectric conversion submodules correspond to different upstream wavelengths and different downstream wavelengths. Each photoelectric conversion submodule is configured to: obtain a first downstream electrical signal transmitted by the routing and switching device, convert the obtained first downstream electrical signal into an optical signal of a downstream wavelength corresponding to the photoelectric conversion submodule, and transmit the optical signal of the downstream wavelength corresponding to the photoelectric conversion submodule to the first optical multiplexer. The first optical multiplexer is configured to obtain optical signals of a plurality of downstream wavelengths transmitted by the plurality of photoelectric conversion submodules. The first downstream electrical signal carries downstream information.

A structure of the photoelectric conversion submodule in FIG. 4 is similar to a structure of the photoelectric conversion submodule in FIG. 2 and FIG. 3. Details are not described herein again.

The central optical module further includes a beamsplitter, where the beamsplitter is referred to as a second beamsplitter, and the second beamsplitter is connected to the first optical multiplexer of the central optical module, and is further connected to the second optical splitter of the intermediate device. The second beamsplitter is configured to transmit the first downstream optical signal to the second optical splitter. That is, different from the first specific implementation, in the second specific implementation, the intermediate device may not include a beamsplitter.

If the intermediate device does not include a beamsplitter, to distinguish between an upstream signal and a downstream signal, the first beamsplitter in the first specific implementation may be integrated into the access-side optical module. For example, in the second specific implementation, the access-side optical module includes a beamsplitter and a filter, the beamsplitter is referred to as a third beamsplitter, the filter is referred to as a second filter, and the third beamsplitter is separately connected to the second filter and a port of the intermediate device through optical fibers. The third beamsplitter is configured to: receive a third downstream optical signal transmitted by the port of the intermediate device through the optical fiber, to obtain the fourth downstream optical signal, and transmit the fourth downstream optical signal to the second filter. The second filter is configured to filter the fourth downstream optical signal, to obtain the optical signal of the downstream wavelength corresponding to the access-side optical module.

Refer to FIG. 4. The access-side optical module further includes a PD, where the PD is connected to the second filter through an optical fiber, and the second filter is further configured to transmit the optical signal of the downstream wavelength corresponding to the access-side optical module to the PD. A specific function and an implementation of the second filter herein are the same as those of the first filter in the foregoing first specific implementation. Details are not described herein again. Similarly, a specific function and an implementation of the PD herein are the same as those of the PD in the foregoing first specific implementation. Details are not described herein again either.

The second filter herein may also be replaced with an optical demultiplexer. For example, the access-side optical module includes a third optical demultiplexer (which may be implemented by a DEMUX), and the third optical demultiplexer is configured to: demultiplex the third downstream optical signal transmitted by the port, to obtain optical signals of a plurality of downstream wavelengths, and determine, from the optical signals of the plurality of downstream wavelengths, an optical signal of a downstream wavelength corresponding to the access-side optical module. A specific function and an implementation of the third optical demultiplexer herein are the same as those of the third optical demultiplexer in the foregoing first specific implementation. Details are not described herein again either.

The foregoing describes the downstream information transmission process, and the following describes the upstream information transmission process.

In a wavelength division system, upstream information is transmitted by using an optical signal of an upstream wavelength. Each access-side optical module further corresponds to an upstream wavelength, and different access-side optical modules correspond to different upstream wavelengths. For example, if the system includes eight access-side optical modules, the eight access-side optical modules correspond to eight different upstream wavelengths. In this embodiment of this application, the upstream wavelength is different from the downstream wavelength. For example, the upstream wavelength is greater than the downstream wavelength, or the upstream wavelength is less than the downstream wavelength. In this way, upstream and downstream signals are transmitted in one optical cable, and networking is simple.

In the upstream information transmission process, each of the plurality of access-side optical modules is further configured to transmit, to the connected port, an optical signal of an upstream wavelength corresponding to the access-side optical module. The intermediate device is further configured to: obtain, through the plurality of ports, optical signals of a plurality of upstream wavelengths transmitted by the plurality of access-side optical modules, combine the optical signals of the plurality of upstream wavelengths into a first upstream optical signal, and transmit the first upstream optical signal to the central optical module. The central optical module is further configured to demultiplex the first upstream optical signal into the optical signals of the plurality of upstream wavelengths. An optical signal of each upstream wavelength carries upstream information transmitted by a corresponding access device, and the first upstream optical signal carries upstream information transmitted by the foregoing plurality of access devices. In other words, the optical signal of the upstream wavelength transmitted by the access-side optical module is a single-wavelength signal, and the first upstream optical signal is a composite optical signal.

The access-side optical module further includes a second laser (for example, an LD in FIG. 4), and the second laser is connected to the third beamsplitter through an optical fiber. The second laser is configured to: generate an optical signal of an upstream wavelength corresponding to the access-side optical module, and transmit the optical signal of the upstream wavelength to the third beamsplitter. The third beamsplitter is further configured to transmit the optical signal of the upstream wavelength to the connected port.

A specific function and an implementation of the second laser herein are the same as those of the first laser in the foregoing first specific implementation. Details are not described herein again either.

The second optical splitter included in the intermediate device is further configured to: couple, in an energy combination manner, optical signals of a plurality of upstream wavelengths transmitted by the plurality of ports into a first upstream optical signal, and transmit the first upstream optical signal to the central optical module. That is, the second optical splitter herein has functions of both the first optical splitter and the first optical coupler in the first implementation, and the optical splitter is configured to split a downstream signal and couple an upstream signal. In this implementation, communication can be implemented by connecting the second beamsplitter and the second optical splitter between the intermediate device and the central optical module through one optical cable. Networking is simple, and device maintenance and management are facilitated.

Alternatively, the intermediate device further includes a second optical coupler. The second optical coupler is configured to: couple, in an energy combination manner, optical signals of a plurality of upstream wavelengths transmitted by the plurality of ports into a first upstream optical signal, and transmit the first upstream optical signal to the central optical module. In other words, the intermediate device includes not only the second optical splitter, but also the second optical coupler, and the two components separately implement splitting of a downstream signal and coupling of upstream signals. The second optical coupler is separately connected to the plurality of ports through optical fibers, and the second optical coupler is further connected to the second beamsplitter of the central optical module.

A specific function and an implementation of the second optical coupler herein are the same as those of the first optical coupler in the foregoing first specific implementation. Details are not described herein again either.

The central optical module further includes a first optical demultiplexer, where the first optical demultiplexer is connected to the second beamsplitter. The first optical demultiplexer is configured to receive the first upstream optical signal transmitted by the second beamsplitter, and demultiplex the first upstream optical signal into the optical signals of the plurality of upstream wavelengths. A specific function and an implementation of the first optical demultiplexer herein are the same as those of the first optical demultiplexer in the foregoing first specific implementation. Details are not described herein again either.

After the first optical demultiplexer transmits the optical signals of the plurality of upstream wavelengths to the corresponding photoelectric conversion submodules, the photoelectric conversion submodule converts the received optical signal into a first upstream electrical signal, and transmits the first upstream electrical signal to another module of the routing and switching device, so that the routing and switching device obtains corresponding upstream information from the first upstream electrical signal, or performs other processing on the first upstream electrical signal, for example, transmits the first upstream electrical signal to another network device.

With reference to both upstream and downstream directions, the first beamsplitter of the intermediate device in the first specific implementation is integrated into the access-side optical module, to evolve to the foregoing second specific implementation. In this way, mixed insertion of a plurality of access-side optical modules can also be implemented, and specifically, intra-group mixed insertion of optical modules can be implemented, thereby improving flexibility of optical networking and reducing difficulty in device management and maintenance.

An implementation of the plurality of ports of the intermediate device in the second specific implementation is similar to the implementation of the plurality of ports in the first specific implementation. Details are not described herein again.

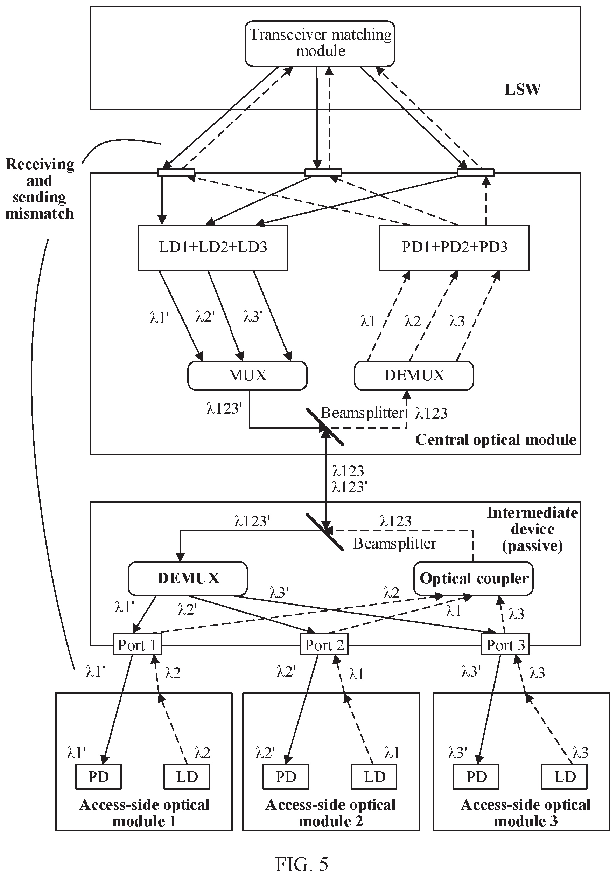

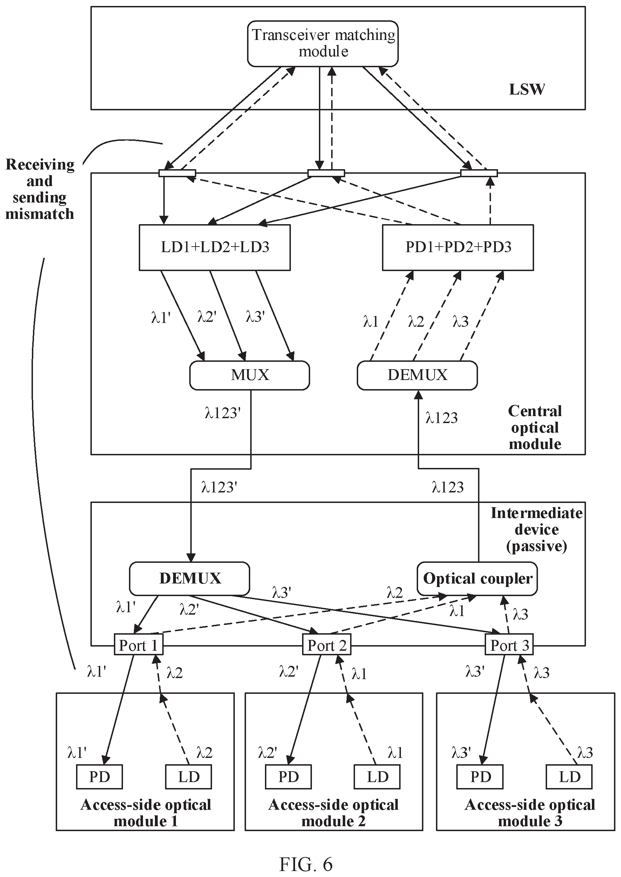

FIG. 5 and FIG. 6 are diagrams of architectures of two other optical communication systems according to embodiments of this application. With reference to FIG. 5 and FIG. 6, the following describes specific processes of transmitting downstream information and transmitting upstream information in a third specific implementation.

Refer to FIG. 5 and FIG. 6. The optical communication system includes a routing and switching device (for example, an LSW in the figure). The routing and switching device is inserted with a central optical module or is integrated with a central optical module; the optical communication system further includes an intermediate device and a plurality of access-side optical modules, where the central optical module is connected to the intermediate device through an optical fiber, the routing and switching device further includes a transceiver matching module, and the central optical module includes a first optical demultiplexer (a DEMUX in the central optical module shown in FIG. 5 or FIG. 6) and a plurality of photoelectric conversion submodules. The first optical demultiplexer is separately connected to the plurality of photoelectric conversion submodules through optical fibers. The photoelectric conversion submodule corresponds to one upstream wavelength and one downstream wavelength that have a matching relationship. Different photoelectric conversion submodules correspond to different upstream wavelengths and different downstream wavelengths. The intermediate device includes a first optical coupler (an optical coupler in the intermediate device shown in FIG. 5 or FIG. 6) and a plurality of ports. The first optical coupler is separately connected to the plurality of ports through optical fibers, and each access-side optical module is connected to any port of the intermediate device through an optical fiber. Different access-side optical modules are connected to different ports. Each port corresponds to a downstream wavelength, different ports correspond to different downstream wavelengths, each access-side optical module corresponds to an upstream wavelength, and different access-side optical modules correspond to different upstream wavelengths.

A structure of the photoelectric conversion submodule in FIG. 5 or FIG. 6 is similar to a structure of the photoelectric conversion submodule in FIG. 2 and FIG. 3. Details are not described herein again.

Each photoelectric conversion submodule is configured to: obtain a first downstream electrical signal transmitted by the routing and switching device, convert the obtained first downstream electrical signal into an optical signal of a downstream wavelength corresponding to the photoelectric conversion submodule, and transmit the optical signal of the downstream wavelength to the intermediate device.
the intermediate device is configured to: obtain optical signals of a plurality of downstream wavelengths, and transmit, through each of the plurality of ports, an optical signal of a downstream wavelength corresponding to the port to an access-side optical module connected to the port, where the plurality of downstream wavelengths include a downstream wavelength corresponding to at least one port.

A first optical module in the plurality of access-side optical modules is configured to receive an optical signal of a first downstream wavelength transmitted by a first port, and is further configured to transmit an optical signal of a first upstream wavelength to the first port, where the first downstream wavelength does not match the first upstream wavelength, and the first optical module is any one of the plurality of access-side optical modules. The first port is a port connected to the first optical module.

The intermediate device is further configured to: receive optical signals of a plurality of upstream wavelengths through the plurality of ports, couple the optical signals of the plurality of upstream wavelengths into a first upstream optical signal via the first optical coupler, and transmit the first upstream optical signal to the central optical module, where the plurality of upstream wavelengths include an upstream wavelength corresponding to at least one access-side optical module.

The first optical demultiplexer is configured to: obtain the first upstream optical signal, demultiplex the first upstream optical signal into the optical signals of the plurality of upstream wavelengths, and separately transmit an optical signal of an upstream wavelength corresponding to each photoelectric conversion submodule to the plurality of photoelectric conversion submodules.

Each photoelectric conversion submodule is further configured to: convert the optical signal of the upstream wavelength corresponding to the photoelectric conversion submodule into a first upstream electrical signal, and transmit the first upstream electrical signal to the transceiver matching module.

The transceiver matching module is configured to match the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby. The plurality of first downstream electrical signals include first downstream electrical signals transmitted by the plurality of photoelectric conversion submodules, and the plurality of first upstream electrical signals include first upstream electrical signals transmitted by the plurality of photoelectric conversion submodules.

It can be learned that, even if the plurality of access-side optical modules are intermixed into the plurality of ports of the intermediate device, and therefore, one or more ports of the intermediate device receive an optical signal of any possible upstream wavelength in the plurality of upstream wavelengths, the optical signal of the upstream wavelength can be transmitted to the central optical module in a coupling manner via the first optical coupler of the intermediate device. Even if in this case, a downstream optical signal and an upstream optical signal transmitted by a same photoelectric conversion submodule are not optical signals related to the same access-side optical module, that is, transmitting and receiving of a same photoelectric conversion submodule do not match, this solution can also implement transmitting and receiving matching via the transceiver matching module of the routing and switching device.

A specific function and an implementation of the first optical demultiplexer of the central optical module herein are the same as those of the first optical demultiplexer in the foregoing first specific implementation. Details are not described herein again.

The at least one port includes a port through which communication is currently performed. For example, if all ports of the intermediate device are currently transmitting downstream optical signals, the at least one port includes all the ports of the intermediate device. The at least one port below is similar.

The central optical module further includes a first optical multiplexer (a MUX in the central optical module shown in FIG. 5 or FIG. 6), and the intermediate device further includes a second optical demultiplexer (a DEMUX in the intermediate device shown in FIG. 5 or FIG. 6). The first optical multiplexer is separately connected to the plurality of photoelectric conversion submodules through optical fibers, and the second optical demultiplexer is separately connected to the plurality of ports of the intermediate device through optical fibers. The first optical multiplexer is configured to: combine the optical signals of the plurality of downstream wavelengths into a first downstream optical signal, and transmit the first downstream optical signal to the intermediate device. The second optical demultiplexer is configured to: receive a second downstream optical signal, demultiplex the second downstream optical signal into the optical signals of the plurality of downstream wavelengths, and separately transmit, an optical signal of a downstream wavelength corresponding to each port to the plurality of ports.

A specific function and an implementation of the first optical multiplexer herein are the same as those of the first optical multiplexer in the foregoing first specific implementation. Details are not described herein again.

The second optical demultiplexer herein can split one signal into a plurality of signals of different wavelengths based on wavelengths. For example, the second optical demultiplexer has one input end and a plurality of output ends, the plurality of output ends are in one-to-one correspondence with the plurality of downstream wavelengths, and each output end is connected to one of the plurality of ports based on a corresponding downstream wavelength. In other words, a downstream wavelength corresponding to each output end is the same as a downstream wavelength corresponding to the connected port. The input end of the second optical demultiplexer is configured to receive the second downstream optical signal, and the plurality of output ends are configured to output, to the connected ports, optical signals of downstream wavelengths corresponding to the ports.

In the third specific implementation, the access-side optical module does not require a filter, an optical demultiplexer, or a beamsplitter, an optical signal of a downstream wavelength transmitted by a port of the intermediate device may be directly transmitted to a PD included in the access-side optical module, and an optical signal of an upstream wavelength generated by an LD included in the access-side optical module may also be directly transmitted to a port of the intermediate device.

Similar to the first specific implementation, refer to FIG. 5. The intermediate device further includes a first beamsplitter, the central optical module further includes a second beamsplitter, the first beamsplitter is separately connected to the second optical demultiplexer, the first optical coupler, and the second beamsplitter through optical fibers, and the second beamsplitter is further separately connected to the first optical multiplexer and the first optical demultiplexer through optical fibers. The first beamsplitter is configured to: receive a first upstream optical signal transmitted by the first optical coupler, transmit the first upstream optical signal to the second beamsplitter, receive a first downstream optical signal transmitted by the second beamsplitter, to obtain a second downstream optical signal, and transmit the second downstream optical signal to the second optical demultiplexer. The second beamsplitter is configured to: receive the first downstream optical signal transmitted by the first optical multiplexer, transmit the first downstream optical signal to the first beamsplitter, receive the first upstream optical signal transmitted by the first beamsplitter, to obtain the second upstream optical signal, and transmit the second upstream optical signal to the first optical demultiplexer. In this way, communication between the intermediate device and the central optical module can be implemented through one optical cable. Networking is simpler, and management and maintenance are facilitated.

Alternatively, refer to FIG. 6. The first optical multiplexer is connected to the second optical demultiplexer, the first optical coupler is connected to the first optical demultiplexer, the first optical multiplexer is configured to transmit a first downstream optical signal to the second optical demultiplexer, and the first optical coupler is configured to transmit a first upstream optical signal to the first optical demultiplexer. In this way, the intermediate device and the central optical module can also communicate with each other through two optical cables.

An implementation of the plurality of ports of the intermediate device in the third specific implementation is similar to the implementation of the plurality of ports in the first specific implementation. Details are not described herein again.

The transceiver matching module in the routing and switching device may be a module in a chip in the routing and switching device, for example, a chip in a central switch. In this solution, an upper-layer chip is used to perform transceiver matching, ensuring reliability of optical communication when the access-side optical modules are intermixed.

The foregoing describes three specific implementations provided in embodiments of this application with reference to FIG. 2 to FIG. 6. In all the three specific implementations, mixed insertion of access-side optical modules can be implemented while optical communication reliability is ensured, thereby improving flexibility of optical networking and reducing difficulty in device management and maintenance. The foregoing three specific implementations may be applied separately, or may be applied together, to implement flexible networking in different scenarios.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

It can be learned from the foregoing that, to allow for intermixture of access-side optical modules, embodiments of this application provide at least three specific implementations of the optical communication system. In the second specific implementation, a beamsplitter included in the intermediate device in the first implementation is integrated into the access-side optical module. In other words, a principle of the second specific implementation is similar to that of the first specific implementation, and a principle of the third specific implementation is different from those of the first two specific implementations. The following describes optical communication methods corresponding to the several optical communication systems in two embodiments. The first embodiment in the two embodiments corresponds to the first two specific implementations, and the second embodiment corresponds to the third specific implementation.

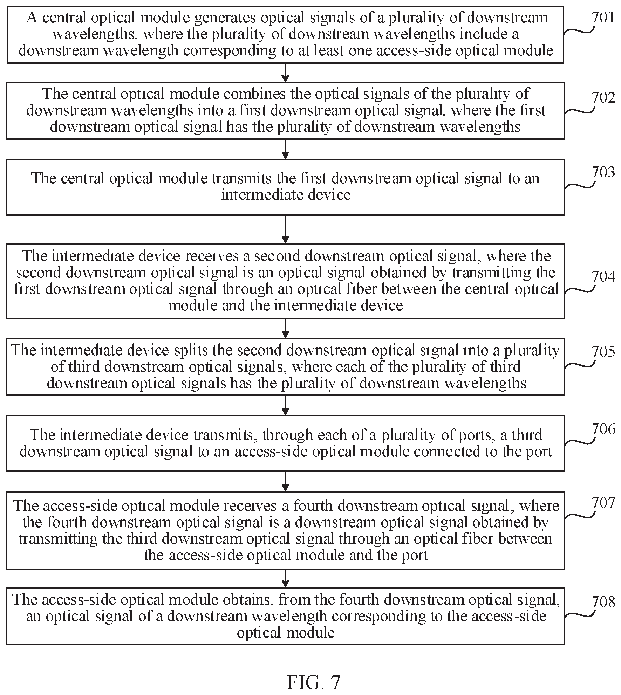

FIG. 7 is a flowchart of an optical communication method according to an embodiment of this application. The method embodiment corresponds to the foregoing first two specific implementations. The method is applied to an optical communication system. The optical communication system includes a central optical module, an intermediate device, and a plurality of access-side optical modules, where the central optical module is connected to the intermediate device through an optical fiber, the intermediate device includes a plurality of ports, each access-side optical module is connected to any one of the plurality of ports through an optical fiber, different access-side optical modules are connected to different ports, each access-side optical module corresponds to a downstream wavelength, and different access-side optical modules correspond to different downstream wavelengths. Refer to FIG. 7. The method includes the following steps.

**Step 701:** The central optical module generates optical signals of a plurality of downstream wavelengths, where the plurality of downstream wavelengths include a downstream wavelength corresponding to at least one access-side optical module.

The central optical module is inserted into a routing and switching device, or the central optical module is integrated in a routing and switching device, and the routing and switching device is configured to access the optical communication system via the central optical module.

The central optical module includes a plurality of photoelectric conversion submodules. The photoelectric conversion submodule corresponds to one upstream wavelength and one downstream wavelength that have a matching relationship, and different photoelectric conversion submodules correspond to different upstream wavelengths and different downstream wavelengths. Each photoelectric conversion submodule obtains a first downstream electrical signal transmitted by the routing and switching device, and converts the obtained first downstream electrical signal into an optical signal of a downstream wavelength corresponding to the photoelectric conversion submodule. The first downstream electrical signal comes from another network device or is generated by the routing and switching device. The first downstream electrical signal carries downstream information transmitted to the access-side optical module. Each optical signal in the optical signals of the plurality of downstream wavelengths carries downstream information transmitted to the corresponding access-side optical module.

**Step 702:** The central optical module combines the optical signals of the plurality of downstream wavelengths into a first downstream optical signal, where the first downstream optical signal has the plurality of downstream wavelengths.

The central optical module includes a first optical multiplexer, where the first optical multiplexer is separately connected to the plurality of photoelectric conversion submodules through optical fibers, the photoelectric conversion submodule transmits an optical signal of a downstream wavelength corresponding to the photoelectric conversion submodule to the first optical multiplexer. After obtaining the optical signals of the plurality of downstream wavelengths transmitted by the plurality of photoelectric conversion submodules, the first optical multiplexer combines the optical signals of the plurality of downstream wavelengths into the first downstream optical signal. The first downstream optical signal is a composite optical signal having the plurality of downstream wavelengths. The first downstream optical signal carries downstream information transmitted to the plurality of access-side optical modules.

In addition to combining the optical signals of the plurality of downstream wavelengths via the first optical multiplexer, the central optical module may alternatively perform the operation via another component with a similar function. This is not limited in this embodiment of this application.

**Step 703:** The central optical module transmits the first downstream optical signal to the intermediate device.

In an implementation, the central optical module further includes a second beamsplitter, the first optical multiplexer is further connected to the second beamsplitter through an optical fiber, and the second beamsplitter is connected to the intermediate device through an optical fiber. The first optical multiplexer transmits the first downstream optical signal to the second beamsplitter, and the second beamsplitter transmits the first downstream optical signal to the intermediate device.

In another implementation, the first optical multiplexer is directly connected to the intermediate device through an optical fiber. The first optical multiplexer transmits the first downstream optical signal to the intermediate device.

The foregoing two implementations respectively correspond to the optical communication systems shown in FIG. 2 and FIG. 3, that is, correspond to the first specific implementation of the optical communication system. In the second specific implementation of the optical communication system, the central optical module further includes a second beamsplitter, and the second beamsplitter is connected to the intermediate device through an optical fiber.

**Step 704:** The intermediate device receives a second downstream optical signal, where the second downstream optical signal is a first downstream optical signal obtained by transmitting the first downstream optical signal through the optical fiber between the central optical module and the intermediate device.

In the implementation in which the central optical module further includes the second beamsplitter, corresponding to the first specific implementation of the optical communication system, the intermediate device further includes a first beamsplitter, and the first beamsplitter is connected to the second beamsplitter through an optical fiber. The second beamsplitter transmits the first downstream optical signal to the first beamsplitter, and the first beamsplitter receives the first downstream optical signal transmitted by the second beamsplitter, to obtain the second downstream optical signal. In addition, the intermediate device further includes a first optical splitter, the first optical splitter is connected to the first beamsplitter through an optical fiber, and the first beamsplitter further transmits the second downstream optical signal to the first optical splitter.

In the implementation in which the first optical multiplexer of the central optical module is directly connected to the intermediate device through the optical fiber, corresponding to the first specific implementation of the optical communication system, the intermediate device further includes a first optical splitter, and the first optical multiplexer is connected to the first optical splitter through an optical fiber. The first optical multiplexer transmits the first downstream optical signal to the first optical splitter, and the first optical splitter receives the first downstream optical signal transmitted by the first optical multiplexer, to obtain the second downstream optical signal.

Corresponding to the second specific implementation of the optical communication system, the central optical module further includes a second beamsplitter, the intermediate device includes a second optical splitter, the second beamsplitter is connected to the second optical splitter through an optical fiber, and the second beamsplitter transmits the first downstream optical signal to the second optical splitter. The second optical splitter receives the first downstream optical signal transmitted by the second beamsplitter, to obtain the second downstream optical signal.

**Step 705:** The intermediate device splits the second downstream optical signal into a plurality of third downstream optical signals, where each of the plurality of third downstream optical signals has the plurality of downstream wavelengths.

In other words, the third downstream optical signal is also a composite optical signal having the plurality of downstream wavelengths. The third downstream optical signal also carries the downstream information transmitted to the plurality of access-side optical modules.

It can be learned from the foregoing descriptions that the intermediate device further includes the first optical splitter or the second optical splitter. In this case, the first optical splitter or the second optical splitter splits the second downstream optical signal into the plurality of third downstream optical signals in an energy division manner.

The first optical splitter is used as an example. The first optical splitter splits the second downstream optical signal into the plurality of third downstream optical signals in an energy-equalizing manner, where the plurality of third downstream optical signals have equal energy. Alternatively, the first optical splitter may not evenly allocate energy of the second downstream optical signal, but allocate the energy based on another proportion. In other words, energy of the plurality of obtained third downstream optical signals may be different. This is not limited in this embodiment of this application. When the intermediate device is a passive device, a sum of the energy of the plurality of third downstream optical signals does not exceed the energy of the second downstream optical signal. When the intermediate device is an active device, a sum of the energy of the plurality of third downstream optical signals may exceed the energy of the second downstream optical signal. For example, the intermediate device further includes an energy amplifier, and the energy amplifier is used to make the sum of energy of the plurality of third downstream optical signals exceed the energy of the second downstream optical signal, thereby improving quality of the third downstream optical signal.

In addition to performing energy allocation on the second downstream wavelength optical signal via the first optical splitter or the second optical splitter, the intermediate device may alternatively perform the operation via another component with a similar function. This is not limited in this embodiment of this application.

**Step 706:** The intermediate device transmits, through each of the plurality of ports, a third downstream optical signal to the access-side optical module connected to the port.

In the implementation in which the intermediate device includes the first optical splitter, the first optical splitter is further separately connected to the plurality of ports of the intermediate device through optical fibers. The first optical splitter transmits the third downstream optical signal to each of the plurality of ports, so that the third downstream optical signal is transmitted to the connected access-side optical module through the port.

In the implementation in which the intermediate device includes the second optical splitter, the second optical splitter is further separately connected to the plurality of ports of the intermediate device through optical fibers. The second optical splitter transmits the third downstream optical signal to each of the plurality of ports, so that the third downstream optical signal is transmitted to the connected access-side optical module through the port.

**Step 707:** The access-side optical module receives a fourth downstream optical signal, where the fourth downstream optical signal is a third downstream optical signal obtained by transmitting the third downstream optical signal through the optical fiber between the access-side optical module and the port.

A first optical module in the plurality of access-side optical modules is used as an example. The first optical module is connected to a first port of the intermediate device, and the first optical module receives a third downstream optical signal transmitted by the first port, to obtain a fourth downstream optical signal. This may be briefly described in this specification as follows: The first optical module receives a downstream optical signal transmitted by the first port. The downstream optical signal received by the first optical module includes the optical signals of the plurality of downstream wavelengths.

The first optical module is any one of the plurality of access-side optical modules. The access-side optical module is inserted into an access device, or the access-side optical module is integrated in an access device, and the access device is configured to access the optical communication system via the first optical module.

**Step 708:** The access-side optical module obtains, from the fourth downstream optical signal, an optical signal of a downstream wavelength corresponding to the access-side optical module.

The first optical module is still used as an example. The first optical module corresponds to a first downstream wavelength, and the first optical module obtains an optical signal of the first downstream wavelength from the fourth downstream optical signal.

Corresponding to the first specific implementation of the optical communication system, in this embodiment of this application, the first optical module includes a first filter. The first filter filters the downstream optical signal received by the first optical module, to obtain the optical signal of the first downstream wavelength. Alternatively, in some other embodiments, the first optical module includes a second optical demultiplexer, and the second optical demultiplexer demultiplexes the downstream optical signal received by the first optical module, and determines the optical signal of the first downstream wavelength from optical signals of a plurality of downstream wavelengths obtained through demultiplexing.

Corresponding to the second specific implementation of the optical communication system, in this embodiment of this application, the first optical module includes a third beamsplitter and a second filter (or a third optical demultiplexer), and the third beamsplitter is separately connected to the first port and the first filter through optical fibers. The first beamsplitter receives the third downstream optical signal transmitted by the first port, and transmits the third downstream optical signal to the second filter. The second filter demultiplexes the received fourth downstream optical signal to obtain the optical signal of the first downstream wavelength.

In addition to processing, via a filter and an optical demultiplexer, the downstream optical signal received by the access-side optical module, to obtain the optical signal of the downstream wavelength corresponding to the access-side optical module, the access-side optical module may alternatively perform the operation via another component with a similar function. This is not limited in this embodiment of this application.

In addition, different access-side optical modules may obtain optical signals of corresponding downstream wavelengths in a same manner or different manners. For example, all of the plurality of access-side optical modules obtain optical signals of corresponding downstream wavelengths via the first filter, or some access-side optical modules obtain optical signals of corresponding downstream wavelengths via the first filter, and the other access-side optical modules obtain optical signals of corresponding downstream wavelengths via the second optical demultiplexer.

In a possible implementation, the first optical module further includes a PD. After obtaining the optical signal of the first downstream wavelength, the first filter (or the second optical demultiplexer, the second filter, or the third optical demultiplexer) transmits the optical signal of the first downstream wavelength to the PD. The PD performs photoelectric conversion on the optical signal of the first downstream wavelength to obtain a second downstream electrical signal, and transmits the second downstream electrical signal to another module of the access device, so that the another module of the access device obtains corresponding downstream information from the second downstream electrical signal, or transmit the second downstream electrical signal to a user terminal connected to the access device.

The foregoing describes the downstream information transmission process in the first specific implementation by using step 701 to step 708. The following describes the upstream information transmission process in the first specific implementation by using step 801 to step 806.

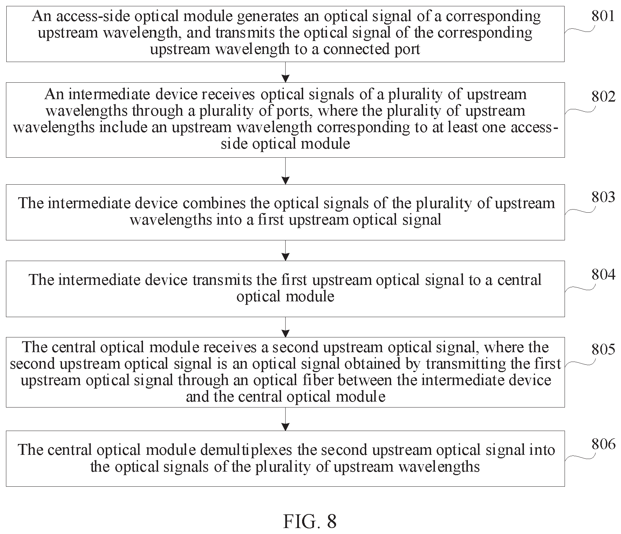

In this embodiment of this application, each access-side optical module further corresponds to an upstream wavelength, and different access-side optical modules correspond to different upstream wavelengths. Refer to FIG. 8. The upstream information transmission process includes the following steps.

**Step 801:** An access-side optical module generates an optical signal of a corresponding upstream wavelength, and transmits the optical signal of the corresponding upstream wavelength to a connected port.

The optical signal of the upstream wavelength carries upstream information transmitted by the corresponding access-side optical module.

The foregoing first optical module is used as an example. The first optical module further corresponds to a first upstream wavelength. The first optical module generates an optical signal of the first upstream wavelength, and transmits the optical signal of the first upstream wavelength to a first port. The optical signal of the first upstream wavelength carries upstream information transmitted by the first optical module.

In this embodiment of this application, the first optical module is an active optical module. For example, the first optical module further includes a laser, and the laser is connected to the first port through an optical fiber. The laser generates the optical signal of the first upstream wavelength, and transmits the optical signal of the first upstream wavelength to the first port.

In the first specific implementation of the optical communication system, the laser in the first optical module may be referred to as a first laser, the first laser is connected to the first port, and the first laser transmits the optical signal of the first upstream wavelength to the first port. In a possible implementation, the first laser includes an LD, the LD is connected to the first port through an optical fiber, and the LD generates the optical signal of the first upstream wavelength and transmits the optical signal of the first upstream wavelength to the first port.

In the second specific implementation of the optical communication system, the laser in the first optical module may be referred to as a second laser, the second laser is connected to a third beamsplitter, the second laser transmits the optical signal of the first upstream wavelength to the third beamsplitter, and the third beamsplitter transmits the optical signal of the first upstream wavelength to the first port. In a possible implementation, a third laser includes an LD, the LD is connected to the third beamsplitter through an optical fiber, and the LD generates the optical signal of the first upstream wavelength and transmits the optical signal of the first upstream wavelength to the third beamsplitter.

In some other possible embodiments, the first optical module is a passive optical module, and the first optical module may receive an optical signal that is of an upstream wavelength corresponding to the first optical module and that is injected by another light source. The injected optical signal of the upstream wavelength may not carry upstream information. The first optical module may modulate the received optical signal, to obtain the optical signal that carries the upstream information and that still has the upstream wavelength.

Manners in which the plurality of access-side optical modules generate the optical signals of the upstream wavelengths corresponding to the plurality of access-side optical modules may be the same or may be different. This is not limited in this embodiment of this application.

**Step 802:** An intermediate device receives the optical signals of the plurality of upstream wavelengths through a plurality of ports, where the plurality of upstream wavelengths include an upstream wavelength corresponding to at least one access-side optical module.

The optical signals of the plurality of upstream wavelengths respectively carry upstream information transmitted by the corresponding access-side optical modules.

**Step 803:** The intermediate device combines the optical signals of the plurality of upstream wavelengths into a first upstream optical signal.

The first upstream optical signal has the plurality of upstream wavelengths, and the first upstream optical signal carries upstream information transmitted by the plurality of access-side optical modules.

Corresponding to the first specific implementation of the optical communication system, the intermediate device further includes a first optical coupler, and the first optical coupler is separately connected to the plurality of ports of the intermediate device through optical fibers. The plurality of ports transmit the optical signals of the plurality of upstream wavelengths to the first optical coupler, and the first optical coupler combines the optical signals of the plurality of upstream wavelengths into the first upstream optical signal in an energy combination manner.

The first optical coupler includes a plurality of input ends. Regardless of an optical signal of which upstream wavelength is received by each of the plurality of input ends, the first optical coupler can couple, into the first upstream optical signal, the optical signals that are of the plurality of upstream wavelengths and that are received via the plurality of input ends, and output the first upstream optical signal. In a related technology, the intermediate device is an optical multiplexer/demultiplexer. To be specific, the intermediate device combines the optical signals of the plurality of upstream wavelengths via the optical multiplexer. The optical multiplexer also includes a plurality of input ends, where the plurality of input ends are in one-to-one correspondence with the plurality of upstream wavelengths, and each input end needs to receive an optical signal of an upstream wavelength corresponding to the input end. In this way, the optical multiplexer can combine the optical signals of the plurality of upstream wavelengths. If one or some input ends receive optical signals that do not correspond to upstream wavelengths, the optical multiplexer cannot combine the optical signals, and consequently, the optical signals that do not correspond to the upstream wavelengths cannot be transmitted to a central optical module. Simply speaking, in the related technology, access-side optical modules, ports of the intermediate device, and the input ends of the optical multiplexer need to be in a one-to-one correspondence, and the access-side optical modules cannot be intermixed. If mixed insertion is performed, an optical signal that does not correspond to an upstream wavelength fails to be transmitted.

Corresponding to the second specific implementation of the optical communication system, the first optical splitter included in the intermediate device not only can split a downstream optical signal, but also can couple the optical signals of the plurality of upstream wavelengths. That is, the first optical splitter further combines the optical signals of the plurality of upstream wavelengths into the first upstream optical signal in an energy combination manner.

In addition to combining the optical signals of the plurality of upstream wavelengths via an optical coupler to obtain the first upstream optical signal, the intermediate device may alternatively perform the operation via another component with a similar function. This is not limited in this embodiment of this application.

**Step 804:** The intermediate device transmits the first upstream optical signal to a central optical module.

In an implementation, the intermediate device further includes a first beamsplitter, the central optical module further includes a second beamsplitter, and the first beamsplitter is separately connected to the second beamsplitter and a first optical coupler through optical fibers. The first optical coupler transmits the first upstream optical signal to the first beamsplitter, and the first beamsplitter transmits the first upstream optical signal to the second beamsplitter. With reference to both upstream and downstream directions, only one optical cable is required for connection between the intermediate device and the central optical module.

In another implementation, a first optical coupler of the intermediate device is connected to a first optical demultiplexer of the central optical module through an optical fiber, and the first optical coupler transmits the first upstream optical signal to the first optical demultiplexer. With reference to both the upstream and downstream directions, only two optical cables are required for connection between the intermediate device and the central optical module.

The foregoing two implementations correspond to the first specific implementation of the optical communication system. In the second specific implementation of the optical communication system, the first optical splitter of the intermediate device transmits the first upstream optical signal to the second beamsplitter of the central optical module.

**Step 805:** The central optical module receives a second upstream optical signal, where the second upstream optical signal is an optical signal obtained by transmitting the first upstream optical signal through the optical fiber between the intermediate device and the central optical module.

In the implementation in which the central optical module includes the second beamsplitter, the second beamsplitter receives the second upstream optical signal. In addition, the second beamsplitter is further connected to the first optical demultiplexer of the central optical module through an optical fiber, and the second beamsplitter transmits the second upstream optical signal to the first optical demultiplexer.

In the implementation in which the first optical coupler of the intermediate device is connected to the first optical demultiplexer of the central optical module through the optical fiber, the first optical demultiplexer receives the first upstream optical signal.

**Step 806:** The central optical module demultiplexes the second upstream optical signal into the optical signals of the plurality of upstream wavelengths.

In this embodiment of this application, the first optical demultiplexer in the central optical module demultiplexes the second upstream optical signal into the optical signals of the plurality of upstream wavelengths.

The first optical demultiplexer has one input end and a plurality of output ends. The plurality of output ends are in one-to-one correspondence with the plurality of upstream wavelengths. The input end receives the second upstream optical signal, and the plurality of output ends respectively output the optical signal of the upstream wavelengths corresponding to the output ends.

In a possible implementation, the central optical module further includes the plurality of photoelectric conversion submodules described above, and each output end of the first optical demultiplexer is connected to one of the plurality of photoelectric conversion submodules based on a corresponding upstream wavelength, that is, an upstream wavelength corresponding to each output end is the same as an upstream wavelength corresponding to the connected photoelectric conversion submodule. The plurality of output ends of the first optical demultiplexer separately output the optical signals of the corresponding upstream wavelengths to the connected photoelectric conversion submodules.

Each photoelectric conversion submodule converts, after receiving an optical signal of an upstream wavelength corresponding to the photoelectric conversion submodule, the received optical signal into a first upstream electrical signal, and transmits the first upstream electrical signal to another module of the routing and switching device, so that the routing and switching device obtains corresponding upstream information from the first upstream electrical signal, or performs other processing on the first upstream electrical signal, for example, transmits the first upstream electrical signal to another network device.

It should be noted that execution sequences of step 701 to step 708 and step 801 to step 806 are not limited in embodiments of this application, and a process of transmitting upstream information and a process of transmitting downstream information may occur simultaneously. Because a transmission medium of the upstream information and the downstream information is an optical signal, and a light speed is very fast, all the foregoing steps are almost completed instantaneously. Therefore, efficiency of optical communication is very high.

In conclusion, in embodiments of this application, to allow for intermixture of optical modules without affecting optical communication, improve networking flexibility of optical communication, and reduce difficulty in device management and maintenance, the intermediate device splits the second downstream optical signal having the plurality of downstream wavelengths into the plurality of third downstream optical signals having the plurality of downstream wavelengths, and transmits one third downstream optical signal to each of the plurality of access-side optical modules through the plurality of ports. Even if the plurality of access-side optical modules are intermixed, each can obtain an optical signal of a respective corresponding downstream wavelength from a received downstream optical signal.

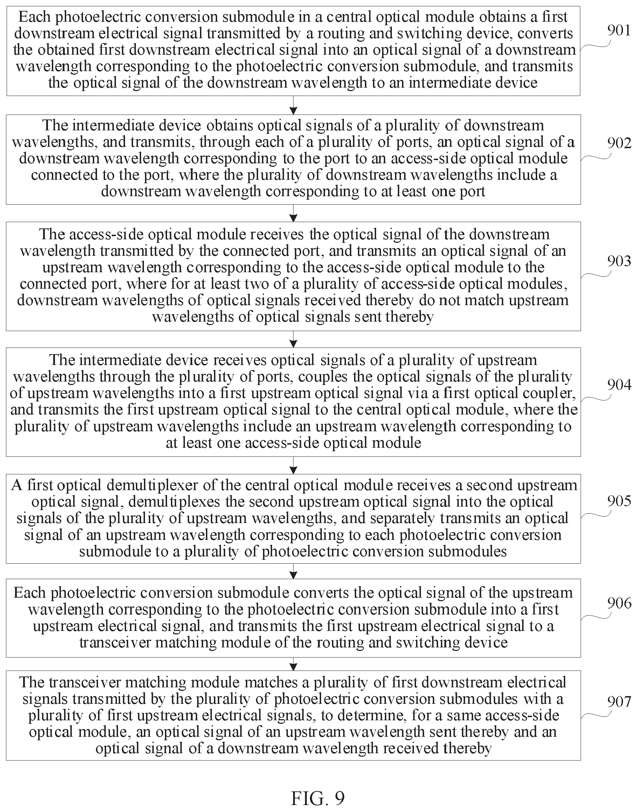

FIG. 9 is a flowchart of still another optical communication method according to an embodiment of this application. The method corresponds to the third specific implementation of the optical communication system. To be specific, the method is applied to an optical communication system. The optical communication system includes a routing and switching device. The routing and switching device is inserted with a central optical module or is integrated with a central optical module. The optical communication system further includes an intermediate device and a plurality of access-side optical modules, where the central optical module is connected to the intermediate device through an optical fiber, the routing and switching device further includes a transceiver matching module, and the central optical module includes a first optical demultiplexer and a plurality of photoelectric conversion submodules. The first optical demultiplexer is separately connected to the plurality of photoelectric conversion submodules through optical fibers. The photoelectric conversion submodule corresponds to one upstream wavelength and one downstream wavelength that have a matching relationship. Different photoelectric conversion submodules correspond to different upstream wavelengths and different downstream wavelengths. The intermediate device includes a first optical coupler and a plurality of ports. The first optical coupler is separately connected to the plurality of ports through optical fibers, and each access-side optical module is connected to any port of the intermediate device through an optical fiber. Different access-side optical modules are connected to different ports. Each port of the intermediate device corresponds to a downstream wavelength, different ports correspond to different downstream wavelengths, each access-side optical module corresponds to an upstream wavelength, and different access-side optical modules correspond to different upstream wavelengths. In addition, the access-side optical module is inserted into an access device, or the access-side optical module is integrated in an access device, and the access device is configured to access the optical communication system via the access-side optical module. Refer to FIG. 9. The method includes the following steps.

**Step 901:** Each photoelectric conversion submodule in the central optical module obtains a first downstream electrical signal transmitted by the routing and switching device, converts the obtained first downstream electrical signal into an optical signal of a downstream wavelength corresponding to the photoelectric conversion submodule, and transmits the optical signal of the downstream wavelength to the intermediate device.

A manner in which the photoelectric conversion submodule obtains and converts the first downstream electrical signal is similar to the manner in which the photoelectric conversion submodule obtains the first downstream electrical signal in the foregoing embodiments in FIG. 2 to FIG. 8. Details are not described herein again.

In this embodiment of this application, the central optical module further includes a first optical multiplexer, where the first optical multiplexer is separately connected to the plurality of photoelectric conversion submodules through optical fibers. After obtaining an optical signal of a downstream wavelength corresponding to each photoelectric conversion submodule, the photoelectric conversion submodule transmits the optical signal of the downstream wavelength to the first optical multiplexer. The first optical multiplexer combines the optical signals of the plurality of downstream wavelengths transmitted by the plurality of photoelectric conversion submodules into a first downstream optical signal, and transmits the first downstream optical signal to the intermediate device. For a specific function, structure, and implementation of the first optical multiplexer, refer to related descriptions in the foregoing embodiments. Details are not described herein again.

In an implementation, the intermediate device further includes a first beamsplitter and a second optical demultiplexer, the central optical module further includes a second beamsplitter, the first beamsplitter is separately connected to the second optical demultiplexer, the first optical coupler, and the second beamsplitter through optical fibers, and the second beamsplitter is further separately connected to the first optical multiplexer and the first optical demultiplexer through optical fibers. The first optical multiplexer transmits the first downstream optical signal to the second beamsplitter. The second beamsplitter obtains the first downstream optical signal transmitted by the first optical multiplexer, and transmits the first downstream optical signal to the first beamsplitter. The first beamsplitter receives a second downstream optical signal, and transmits the second downstream optical signal to the second optical demultiplexer. In this implementation, communication can be implemented by connecting the intermediate device and the central optical module through one optical cable.

The second downstream optical signal is an optical signal obtained by transmitting the first downstream optical signal through an optical fiber between the central optical module and the intermediate device.

In another implementation, the intermediate device further includes a second optical demultiplexer, and the first optical multiplexer of the central optical module is connected to the second optical demultiplexer of the intermediate device through an optical fiber. The first optical multiplexer transmits the first downstream optical signal to the second optical demultiplexer. In this implementation, communication can be implemented by connecting the intermediate device and the central optical module through two optical cables.

**Step 902:** The intermediate device obtains the optical signals of the plurality of downstream wavelengths, and transmits, through each of the plurality of ports, an optical signal of a downstream wavelength corresponding to the port to an access-side optical module connected to the port, where the plurality of downstream wavelengths include a downstream wavelength corresponding to at least one port.

The intermediate device includes a second optical demultiplexer, and the second optical demultiplexer is separately connected to the plurality of ports through optical fibers. The second optical demultiplexer receives the first downstream optical signal transmitted by the central optical module, to obtain a second downstream optical signal, demultiplexes the second downstream optical signal into the foregoing optical signals of the plurality of downstream wavelengths, and separately transmits, to the plurality of ports of the intermediate device, an optical signal of a downstream wavelength corresponding to each port. For a specific function, structure, and implementation of the first optical multiplexer, refer to related descriptions in the foregoing embodiments. Details are not described herein again.

**Step 903:** The access-side optical module receives the optical signal of the downstream wavelength transmitted by the connected port, and transmits an optical signal of an upstream wavelength corresponding to the access-side optical module to the connected port, where for at least two of the plurality of access-side optical modules, downstream wavelengths of optical signals received thereby do not match upstream wavelengths of optical signals sent thereby.

A first optical module in the plurality of access-side optical modules is used as an example. The first optical module receives an optical signal of a first downstream wavelength transmitted by a first port, and transmits an optical signal of a first upstream wavelength to the first port, where the first downstream wavelength does not match the first upstream wavelength, and the first optical module is any one of the plurality of access-side optical modules. The first port is a port connected to the first optical module in the plurality of ports of the intermediate device.

For example, as shown in FIG. 5 and FIG. 6, the plurality of upstream wavelengths include λ1, λ2, and λ3, and three downstream wavelengths that sequentially match the three upstream wavelengths are respectively λ1', λ2', and λ3'. The optical communication system includes three access-side optical modules: an access-side optical module 1, an access-side optical module 2, and an access-side optical module 3. A downstream wavelength of an optical signal received by the access-side optical module 1 and an upstream wavelength of an optical signal sent thereby are respectively λ1' and λ2, a downstream wavelength of an optical signal received by the access-side optical module 2 and an upstream wavelength of an optical signal sent thereby are respectively λ2' and λ1, and a downstream wavelength of an optical signal received by the access-side optical module 3 and an upstream wavelength of an optical signal sent thereby are respectively λ3' and λ3. It can be learned that transmitting and receiving wavelengths of the access-side optical module 1 and the access-side optical module 2 do not match.

It should be understood that a transmission process of an upstream optical signal and a transmission process of a downstream optical signal are independent of each other, and may be performed in parallel. For example, in a wavelength division system, an upstream optical signal and a downstream optical signal are simultaneously transmitted, and may be distinguished by an upstream wavelength and a downstream wavelength. The upstream wavelength is different from the downstream wavelength. For example, the upstream wavelength is greater than a first threshold, and the downstream wavelength is less than the first threshold.

**Step 904:** The intermediate device receives optical signals of a plurality of upstream wavelengths through the plurality of ports, couples the optical signals of the plurality of upstream wavelengths into a first upstream optical signal via the first optical coupler, and transmits the first upstream optical signal to the central optical module, where the plurality of upstream wavelengths include an upstream wavelength corresponding to at least one access-side optical module.

The intermediate device includes the first optical coupler. The first optical coupler is separately connected to the plurality of ports of the intermediate device through optical fibers. The first optical coupler obtains the optical signals of the plurality of upstream wavelengths transmitted by the plurality of ports, and couples the optical signals of the plurality of upstream wavelengths into the first upstream optical signal in an energy combination manner. For a specific function, structure, and implementation of the first optical coupler, refer to related descriptions in the foregoing embodiments. Details are not described herein again.

In the implementation in which the intermediate device further includes the first beamsplitter, the first beamsplitter is further connected to the first optical coupler through an optical fiber, and the first optical coupler transmits the first upstream optical signal to the first beamsplitter. The first beamsplitter obtains the first upstream optical signal transmitted by the first optical coupler, and transmits the first upstream optical signal to the second beamsplitter included in the central optical module.

In the implementation in which the second optical demultiplexer of the intermediate device is connected to the first optical multiplexer of the central optical module through the optical fiber, the first optical coupler of the intermediate device is also connected to the first optical demultiplexer of the central optical module through an optical fiber, and the first optical coupler transmits the first upstream optical signal to the first optical demultiplexer.

**Step 905:** The first optical demultiplexer of the central optical module receives a second upstream optical signal, demultiplexes the second upstream optical signal into the optical signals of the plurality of upstream wavelengths, and separately transmits an optical signal of an upstream wavelength corresponding to each photoelectric conversion submodule to the plurality of photoelectric conversion submodules.

The second upstream optical signal is an optical signal obtained by transmitting the first upstream optical signal through the optical fiber between the intermediate device and the central optical module. The first optical demultiplexer demultiplexes the second upstream optical signal into the optical signals of the plurality of upstream wavelengths based on wavelengths. For a specific function, structure, and implementation of the first optical demultiplexer, refer to related descriptions in the foregoing embodiments. Details are not described herein again.

**Step 906:** Each photoelectric conversion submodule converts the optical signal of the upstream wavelength corresponding to the photoelectric conversion submodule into a first upstream electrical signal, and transmits the first upstream electrical signal to the transceiver matching module of the routing and switching device.

Since for at least two of the plurality of access-side optical modules, downstream wavelengths of optical signals received thereby do not match upstream wavelengths of optical signals sent thereby, upstream optical signals and downstream optical signals transmitted by at least two of the plurality of photoelectric conversion submodules are not optical signals related to a same access-side optical module. Simply speaking, in the plurality of photoelectric conversion submodules, transmitting and receiving of at least two photoelectric conversion submodules do not match. In this case, this solution can implement transmitting and receiving matching via the transceiver matching module.

As shown in FIG. 5 and FIG. 6, the 1^{st} photoelectric conversion submodule includes an LD1 and a PD1. A downstream optical signal transmitted by the LD1 is related to the access-side optical module 1, and an upstream optical signal transmitted by the PD1 is related to the access-side optical module 2. Transmitting and receiving of the 1^{st} photoelectric conversion submodule do not match. The 2^{nd} photoelectric conversion submodule includes an LD2 and a PD2. A downstream optical signal transmitted by the LD2 is related to the access-side optical module 2, and an upstream optical signal transmitted by the PD2 is related to the access-side optical module 1. Transmitting and receiving of the 2^{nd} photoelectric conversion submodule do not match either.

**Step 907:** The transceiver matching module matches the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby.

The transceiver matching module may be a module in a chip included in the routing and switching device, or another module in the routing and switching device. This is not limited in this embodiment of this application. The chip may be referred to as an upper-layer chip of the central optical module.

Because the transceiver matching module receives an electrical signal, the transceiver matching module matches the plurality of first downstream electrical signals with the plurality of first upstream electrical signals, to determine, for a same access-side optical module, an optical signal of an upstream wavelength sent thereby and an optical signal of a downstream wavelength received thereby. The plurality of first downstream electrical signals include first downstream electrical signals transmitted by the plurality of photoelectric conversion submodules, and the plurality of first upstream electrical signals are also first upstream electrical signals transmitted by the plurality of photoelectric conversion submodules.

There are a plurality of implementations in which the transceiver matching module performs transceiver matching. This is not limited in this application. For example, the transceiver matching module performs transceiver matching by using information carried in the first downstream electrical signal and the first upstream electrical signal, where the information may include a source address, a destination address, or other information.

It should be noted that an execution sequence of step 901 to step 907 is not limited in embodiments of this application, and a process of transmitting upstream information and a process of transmitting downstream information may occur simultaneously. Because a transmission medium of the upstream information and the downstream information is an optical signal, and a light speed is very fast, all the foregoing steps are almost completed instantaneously. Therefore, efficiency of optical communication is very high.

In conclusion, in this embodiment of this application, even if a plurality of access-side optical modules are intermixed, an upstream wavelength of an optical signal transmitted by each access-side optical module to the intermediate device may not match a downstream wavelength of a received optical signal. However, the intermediate device can still couple, via an optical coupler, optical signals of a plurality of upstream wavelengths received by a plurality of ports and then transmit the coupled optical signals to the central optical module. In this way, although an optical signal sent and an optical signal received by one or some photoelectric conversion submodules of the central optical module may not be optical signals related to a same access-side optical module, that is, a case in which transmitting and receiving of the plurality of photoelectric conversion submodules, the routing and switching device can determine, via the transceiver matching module, an optical signal sent and an optical signal received by a same access-side optical module, that is, implement transmitting and receiving matching, thereby ensuring reliability of optical communication.

An embodiment of this application further provides an access-side optical module. The access-side optical module may be implemented by software, hardware, or a combination thereof. The access-side optical module may be any access-side optical module in the embodiments in FIG. 1 to FIG. 9.

In other words, an embodiment of this application further provides a first optical module. The first optical module is any one of a plurality of access-side optical modules included in an optical communication system, where the optical communication system further includes an intermediate device, the intermediate device includes a plurality of ports, each access-side optical module is connected to any one of the plurality of ports through an optical fiber, and different access-side optical modules are connected to different ports; the first optical module is connected to a first port in the plurality of ports through an optical fiber; each access-side optical module corresponds to a downstream wavelength, different access-side optical modules correspond to different downstream wavelengths, and the first optical module corresponds to a first downstream wavelength; and the first optical module is configured to:
receive a downstream optical signal transmitted by the first port, where the downstream optical signal has a plurality of downstream wavelengths, and the plurality of downstream wavelengths include a downstream wavelength corresponding to at least one access-side optical module; and
obtain an optical signal of the first downstream wavelength from the downstream optical signal.

In a possible implementation, the first optical module includes a first filter.

The first filter is configured to filter the downstream optical signal to obtain the optical signal of the first downstream wavelength.

In a possible implementation, each access-side optical module further corresponds to an upstream wavelength, different access-side optical modules correspond to different upstream wavelengths, and the first optical module further corresponds to a first upstream wavelength; and the first optical module is further configured to:
generate an optical signal of the first upstream wavelength; and
transmit the optical signal of the first upstream wavelength to the first port.

In a possible implementation, the first optical module further includes a first laser, and the first laser is connected to the first port through an optical fiber.

The first laser is configured to generate an optical signal of the first upstream wavelength.

In a possible implementation, the first optical module includes a first beamsplitter and a second filter, and the first beamsplitter is separately connected to the first port and the second filter through optical fibers.

The first beamsplitter is configured to receive the downstream optical signal transmitted by the first port.

The first beamsplitter is configured to transmit the downstream optical signal to the second filter.

The second filter is configured to demultiplex the downstream optical signal to obtain the optical signal of the first downstream wavelength.

In a possible implementation, each access-side optical module further corresponds to an upstream wavelength, different access-side optical modules correspond to different upstream wavelengths, and the first optical module further corresponds to a first upstream wavelength. The first optical module further includes a second laser, and the second laser is connected to the first beamsplitter.

The second laser is configured to generate an optical signal of the first upstream wavelength, and transmit the optical signal of the first upstream wavelength to the first beamsplitter.

The first beamsplitter is configured to transmit the optical signal of the first upstream wavelength to the first port.

In a possible implementation, the first optical module is inserted into an access device, or the first optical module is integrated in an access device, and the access device is configured to access the optical communication system via the first optical module.

In this embodiment of this application, to allow for intermixture of optical modules without affecting optical communication, improve networking flexibility of optical communication, and reduce difficulty in device management and maintenance, the intermediate device splits the downstream optical signal having the plurality of downstream wavelengths into the plurality of downstream optical signals having the plurality of downstream wavelengths, and transmits one downstream optical signal to each of the plurality of access-side optical modules through the plurality of ports. Even if the plurality of access-side optical modules are intermixed, each can obtain an optical signal of a respective corresponding downstream wavelength from a received downstream optical signal.

It should be noted that, when the access-side optical module provided in the foregoing embodiments performs optical communication, division into the foregoing functional modules is merely described by using an example. In actual application, the foregoing functions may be allocated to different functional modules for implementation according to a requirement. In other words, an internal structure of the apparatus is divided into different functional modules, to implement all or some of the functions described above. In addition, the access-side optical module provided in the foregoing embodiment belongs to a same concept as the system embodiments shown in FIG. 1 to FIG. 4 and the method embodiments shown in FIG. 7 and FIG. 8. For a specific implementation process thereof, refer to the method embodiments. Details are not described herein again.

An embodiment of this application further provides an intermediate device. The intermediate device may be implemented by software, hardware, or a combination thereof. The intermediate device may be any intermediate device in the embodiments in FIG. 1 to FIG. 9.

In other words, an embodiment of this application further provides an intermediate device. The intermediate device is included in an optical communication system, and the optical communication system further includes a central optical module and a plurality of access-side optical modules, where the central optical module is connected to the intermediate device through an optical fiber, the intermediate device includes a plurality of ports, each access-side optical module is connected to any one of the plurality of ports through an optical fiber, different access-side optical modules are connected to different ports, each access-side optical module corresponds to a downstream wavelength, and different access-side optical modules correspond to different downstream wavelengths; and the intermediate device is configured to:
receive a first downstream optical signal transmitted by the central optical module, to obtain a second downstream optical signal, where the first downstream optical signal has a plurality of downstream wavelengths, the plurality of downstream wavelengths include a downstream wavelength corresponding to at least one access-side optical module, and the second downstream optical signal is an optical signal obtained by transmitting the first downstream optical signal through the optical fiber between the central optical module and the intermediate device;
split the second downstream optical signal into a plurality of third downstream optical signals, where each of the plurality of third downstream optical signals has the plurality of downstream wavelengths; and
transmit, through each of the plurality of ports, a third downstream optical signal to an access-side optical module connected to the port, where the third downstream optical signal is used by the access-side optical module to obtain an optical signal of a corresponding downstream wavelength.

In a possible implementation, the intermediate device further includes a first optical splitter, and the first optical splitter is separately connected to the plurality of ports through optical fibers.

The first optical splitter is configured to split the second downstream optical signal into the plurality of third downstream optical signals in an energy division manner.

In a possible implementation, the intermediate device further includes a first beamsplitter, the central optical module includes a second beamsplitter, and the first beamsplitter is separately connected to the second beamsplitter and the first optical splitter through optical fibers.

The first beamsplitter is configured to receive the first downstream optical signal transmitted by the second beamsplitter, to obtain the second downstream optical signal.

In a possible implementation, the central optical module includes a first optical multiplexer, and the first optical multiplexer is connected to the first optical splitter through an optical fiber.

The first optical splitter is further configured to receive the first downstream optical signal transmitted by the first optical multiplexer, to obtain the second downstream optical signal.

In a possible implementation, each access-side optical module further corresponds to an upstream wavelength, and different access-side optical modules correspond to different upstream wavelengths. The intermediate device is further configured to:
receive optical signals of a plurality of upstream wavelengths through the plurality of ports, where the plurality of upstream wavelengths include an upstream wavelength corresponding to at least one access-side optical module;
combine the optical signals of the plurality of upstream wavelengths into a first upstream optical signal; and
transmit the first upstream optical signal to the central optical module.

In a possible implementation, the intermediate device further includes a first optical coupler, and the first optical coupler is separately connected to the plurality of ports through optical fibers.

The first optical coupler is configured to combine the optical signals of the plurality of upstream wavelengths into the first upstream optical signal in an energy combination manner.

In a possible implementation, the intermediate device further includes a first beamsplitter, the central optical module further includes a second beamsplitter, and the first beamsplitter is separately connected to the second beamsplitter and a first optical coupler through optical fibers.

The first optical coupler is further configured to transmit the first upstream optical signal to the first beamsplitter.

The first beamsplitter is configured to transmit the first upstream optical signal to the second beamsplitter.

In a possible implementation, the first optical splitter is further connected to the central optical module through an optical fiber.

The first optical splitter is further configured to receive the first downstream optical signal transmitted by the central optical module, to obtain the second downstream optical signal.

In a possible implementation, each access-side optical module further corresponds to an upstream wavelength, and different access-side optical modules correspond to different upstream wavelengths.

The first optical splitter is further configured to obtain optical signals of a plurality of upstream wavelengths transmitted by the plurality of ports, where the plurality of upstream wavelengths include an upstream wavelength corresponding to at least one access-side optical module.

The first optical splitter is further configured to couple, in an energy combination manner, optical signals of a plurality of upstream wavelengths transmitted by the plurality of ports into a first upstream optical signal, and transmit the first upstream optical signal to the central optical module.

In embodiments of this application, to allow for intermixture of optical modules without affecting optical communication, improve networking flexibility of optical communication, and reduce difficulty in device management and maintenance, the intermediate device splits the first downstream optical signal having the plurality of downstream wavelengths into the plurality of third downstream optical signals having the plurality of downstream wavelengths, and transmits one third downstream optical signal to each of the plurality of access-side optical modules through the plurality of ports. Even if the plurality of access-side optical modules are intermixed, each can obtain an optical signal of a respective corresponding downstream wavelength from a received fourth downstream optical signal.

It should be noted that, when the access-side optical module provided in the foregoing embodiments performs optical communication, division into the foregoing functional modules is merely described by using an example. In actual application, the foregoing functions may be allocated to different functional modules for implementation according to a requirement. In other words, an internal structure of the apparatus is divided into different functional modules, to implement all or some of the functions described above. In addition, the access-side optical module provided in the foregoing embodiment belongs to a same concept as the system embodiments shown in FIG. 1 to FIG. 4 and the method embodiments shown in FIG. 7 and FIG. 8. For a specific implementation process thereof, refer to the method embodiments. Details are not described herein again.

An embodiment of this application further provides a central optical module. The central optical module may be implemented by software, hardware, or a combination thereof. The central optical module may be any central optical module in the embodiments in FIG. 1 to FIG. 9.

In other words, a central optical module is provided, and is included in an optical communication system. The optical communication system further includes an intermediate device and a plurality of access-side optical modules, where the central optical module is connected to the intermediate device through an optical fiber, the intermediate device includes a plurality of ports, each access-side optical module is connected to any one of the plurality of ports through an optical fiber, different access-side optical modules are connected to different ports, each access-side optical module corresponds to a downstream wavelength, and different access-side optical modules correspond to different downstream wavelengths. The central optical module is configured to:
generate optical signals of a plurality of downstream wavelengths, where the plurality of downstream wavelengths include a downstream wavelength corresponding to at least one access-side optical module;
combine the optical signals of the plurality of downstream wavelengths into a first downstream optical signal, where the first downstream optical signal has the plurality of downstream wavelengths; and
transmit the first downstream optical signal to the intermediate device, where the first downstream optical signal is used by the intermediate device to split a received second downstream optical signal into a plurality of third downstream optical signals, and transmit, through each of the plurality of ports, a third downstream optical signal to an access-side optical module connected to the port, so that each access-side optical module obtains, from a received fourth downstream optical signal, an optical signal of a downstream wavelength corresponding to the access-side optical module, where the second downstream optical signal is an optical signal obtained by transmitting the first downstream optical signal through the optical fiber between the central optical module and the intermediate device, and the fourth downstream optical signal is an optical signal obtained by transmitting the third downstream optical signal through an optical fiber between the access-side optical module and the port of the intermediate device.

In a possible implementation, the central optical module is inserted into a routing and switching device, or the central optical module is integrated in a routing and switching device, and the routing and switching device is configured to access the optical communication system via the central optical module.

In this embodiment of this application, to allow for intermixture of optical modules without affecting optical communication, improve networking flexibility of optical communication, and reduce difficulty in device management and maintenance, the intermediate device splits the second downstream optical signal having the plurality of downstream wavelengths into the plurality of third downstream optical signals having the plurality of downstream wavelengths, and transmits one third downstream optical signal to each of the plurality of access-side optical modules through the plurality of ports. Even if the plurality of access-side optical modules are intermixed, each can obtain an optical signal of a respective corresponding downstream wavelength from a received fourth downstream optical signal.

It should be noted that, when the access-side optical module provided in the foregoing embodiments performs optical communication, division into the foregoing functional modules is merely described by using an example. In actual application, the foregoing functions may be allocated to different functional modules for implementation according to a requirement. In other words, an internal structure of the apparatus is divided into different functional modules, to implement all or some of the functions described above. In addition, the access-side optical module provided in the foregoing embodiment belongs to a same concept as the system embodiments shown in FIG. 1 to FIG. 4 and the method embodiments shown in FIG. 7 and FIG. 8. For a specific implementation process thereof, refer to the method embodiments. Details are not described herein again.

An embodiment of this application further provides an access-side optical module. The access-side optical module may be implemented by software, hardware, or a combination thereof. The access-side optical module may be any access-side optical module in the embodiments in FIG. 1 to FIG. 9.

In other words, a first optical module is provided, where the first optical module is any one of a plurality of access-side optical modules included in an optical communication system, the optical communication system further includes an intermediate device and a routing and switching device, the routing and switching device is connected to the intermediate device through an optical fiber, the intermediate device includes a plurality of ports, and the first optical module is connected to a first port in the plurality of ports through an optical fiber, where the first port is any one of the plurality of ports, each port corresponds to a downstream wavelength, different ports correspond to different downstream wavelengths, the first port corresponds to a first downstream wavelength, the downstream wavelength further matches an upstream wavelength, and different downstream wavelengths match different upstream wavelengths; the first optical module corresponds to a first upstream wavelength, and the first upstream wavelength does not match the first downstream wavelength; and the first optical module is configured to:
receive an optical signal of the first downstream wavelength transmitted by the first port; and
transmit an optical signal of the first upstream wavelength to the first port, to transmit the optical signal of the first upstream wavelength to the routing and switching device via the intermediate device, where the routing and switching device is configured to match, for a same access-side optical module, an optical signal of a downstream wavelength received thereby with an optical signal of an upstream wavelength sent thereby.

In this embodiment of this application, even if a plurality of access-side optical modules are intermixed, an upstream wavelength of an optical signal transmitted by each access-side optical module to the intermediate device may not match a downstream wavelength of a received optical signal. However, the intermediate device can still couple, via an optical coupler, optical signals of a plurality of upstream wavelengths received by a plurality of ports and then transmit the coupled optical signals to the central optical module. In this way, although an optical signal sent and an optical signal received by one or some photoelectric conversion submodules of the central optical module may not be optical signals related to a same access-side optical module, that is, a case in which transmitting and receiving of the plurality of photoelectric conversion submodules do not match, the routing and switching device can determine, via the transceiver matching module, an optical signal sent and an optical signal received by a same access-side optical module, that is, implement transmitting and receiving matching, thereby ensuring reliability of optical communication.

It should be noted that, when the access-side optical module provided in the foregoing embodiments performs optical communication, division into the foregoing functional modules is merely described by using an example. In actual application, the foregoing functions may be allocated to different functional modules for implementation according to a requirement. In other words, an internal structure of the apparatus is divided into different functional modules, to implement all or some of the functions described above. In addition, the access-side optical module provided in the foregoing embodiment belongs to a same concept as the method embodiments shown in FIG. 1, FIG. 5, FIG. 6, and FIG. 9. For a specific implementation process thereof, refer to the method embodiments. Details are not described herein again.

An embodiment of this application further provides an intermediate device. The intermediate device may be implemented by software, hardware, or a combination thereof. The intermediate device may be any intermediate device in the embodiments in FIG. 1 to FIG. 9.

In other words, an intermediate device is provided, and is included in an optical communication system. The optical communication system further includes a routing and switching device and a plurality of access-side optical modules, the routing and switching device is connected to the intermediate device through an optical fiber, the intermediate device includes a first optical coupler and a plurality of ports, the first optical coupler is separately connected to the plurality of ports through optical fibers, each of the plurality of access-side optical modules is connected to any one of the plurality of ports through an optical fiber, different access-side optical modules are connected to different ports, each port corresponds to a downstream wavelength, different ports correspond to different downstream wavelengths, each downstream wavelength further matches an upstream wavelength, different downstream wavelengths match different upstream wavelengths, each access-side optical module corresponds to an upstream wavelength, and different access-side optical modules correspond to different upstream wavelengths; and the intermediate device is configured to:
obtain optical signals of a plurality of downstream wavelengths transmitted by the routing and switching device, where the plurality of downstream wavelengths include a downstream wavelength corresponding to at least one port;
transmit, through each of the plurality of ports, an optical signal of a downstream wavelength corresponding to the port to an access-side optical module connected to the port, and receive, through the plurality of ports, an optical signal of an upstream wavelength transmitted by the access-side optical module, where for a same port in the plurality of ports, a downstream wavelength of an optical signal sent thereby does not match an upstream wavelength of an optical signal received thereby;
couple, via the first optical coupler, optical signals of a plurality of upstream wavelengths received through the plurality of ports into a first upstream optical signal; and
transmit the first upstream optical signal to the routing and switching device, where the routing and switching device is configured to determine, for a same access-side optical module by matching the optical signals of the plurality of upstream wavelengths with the optical signals of the plurality of downstream wavelengths, an optical signal of an upstream wavelength sent thereby and an optical signal of a downstream wavelength received thereby.

In this embodiment of this application, even if a plurality of access-side optical modules are intermixed, an upstream wavelength of an optical signal transmitted by each access-side optical module to the intermediate device may not match a downstream wavelength of a received optical signal. However, the intermediate device can still couple, via an optical coupler, optical signals of a plurality of upstream wavelengths received by a plurality of ports and then transmit the coupled optical signals to the central optical module. In this way, although an optical signal sent and an optical signal received by one or some photoelectric conversion submodules of the central optical module may not be optical signals related to a same access-side optical module, that is, a case in which transmitting and receiving of the plurality of photoelectric conversion submodules do not match, the routing and switching device can determine, via the transceiver matching module, an optical signal sent and an optical signal received by a same access-side optical module, that is, implement transmitting and receiving matching, thereby ensuring reliability of optical communication.

It should be noted that, when the access-side optical module provided in the foregoing embodiments performs optical communication, division into the foregoing functional modules is merely described by using an example. In actual application, the foregoing functions may be allocated to different functional modules for implementation according to a requirement. In other words, an internal structure of the apparatus is divided into different functional modules, to implement all or some of the functions described above. In addition, the access-side optical module provided in the foregoing embodiment belongs to a same concept as the method embodiments shown in FIG. 1, FIG. 5, FIG. 6, and FIG. 9. For a specific implementation process thereof, refer to the method embodiments. Details are not described herein again.

An embodiment of this application further provides a routing and switching device. The routing and switching device may be implemented by software, hardware, or a combination thereof. The routing and switching device may be any routing and switching device in the embodiments in FIG. 1 to FIG. 9.

In other words, a routing and switching device is provided, where the routing and switching device is included in an optical communication system, the routing and switching device is inserted with a central optical module or is integrated with a central optical module; the optical communication system further includes an intermediate device and a plurality of access-side optical modules, where the central optical module is connected to the intermediate device through an optical fiber, the routing and switching device further includes a transceiver matching module, and the central optical module includes a first optical demultiplexer and a plurality of photoelectric conversion submodules, where the first optical demultiplexer is separately connected to the plurality of photoelectric conversion submodules through optical fibers, each photoelectric conversion submodule corresponds to one upstream wavelength and one downstream wavelength that have a matching relationship, and different photoelectric conversion submodules correspond to different upstream wavelengths and different downstream wavelengths; and the intermediate device includes a plurality of ports, each access-side optical module is connected to any one of the plurality of ports through an optical fiber, different access-side optical modules are connected to different ports, each port corresponds to a downstream wavelength, different ports correspond to different downstream wavelengths, each access-side optical module corresponds to an upstream wavelength, and different access-side optical modules correspond to different upstream wavelengths.

Each of the plurality of photoelectric conversion submodules is configured to: obtain a first downstream electrical signal transmitted by the routing and switching device, convert the obtained first downstream electrical signal into an optical signal of a downstream wavelength corresponding to the photoelectric conversion submodule, and transmit the optical signal of the downstream wavelength to the intermediate device.

Each photoelectric conversion submodule is further configured to: receive an optical signal that is of an upstream wavelength corresponding to the photoelectric conversion submodule and that is transmitted by the intermediate device, convert the received optical signal of the upstream wavelength into a first upstream electrical signal, and transmit the first upstream electrical signal to the transceiver matching module.

The transceiver matching module is configured to match the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby.

In this embodiment of this application, even if a plurality of access-side optical modules are intermixed, an upstream wavelength of an optical signal transmitted by each access-side optical module to the intermediate device may not match a downstream wavelength of a received optical signal. However, the intermediate device can still couple, via an optical coupler, optical signals of a plurality of upstream wavelengths received by a plurality of ports and then transmit the coupled optical signals to the central optical module. In this way, although an optical signal sent and an optical signal received by one or some photoelectric conversion submodules of the central optical module may not be optical signals related to a same access-side optical module, that is, a case in which transmitting and receiving of the plurality of photoelectric conversion submodules do not match, the routing and switching device can determine, via the transceiver matching module, an optical signal sent and an optical signal received by a same access-side optical module, that is, implement transmitting and receiving matching, thereby ensuring reliability of optical communication.

It should be noted that, when the access-side optical module provided in the foregoing embodiments performs optical communication, division into the foregoing functional modules is merely described by using an example. In actual application, the foregoing functions may be allocated to different functional modules for implementation according to a requirement. In other words, an internal structure of the apparatus is divided into different functional modules, to implement all or some of the functions described above. In addition, the access-side optical module provided in the foregoing embodiment belongs to a same concept as the method embodiments shown in FIG. 1, FIG. 5, FIG. 6, and FIG. 9. For a specific implementation process thereof, refer to the method embodiments. Details are not described herein again.

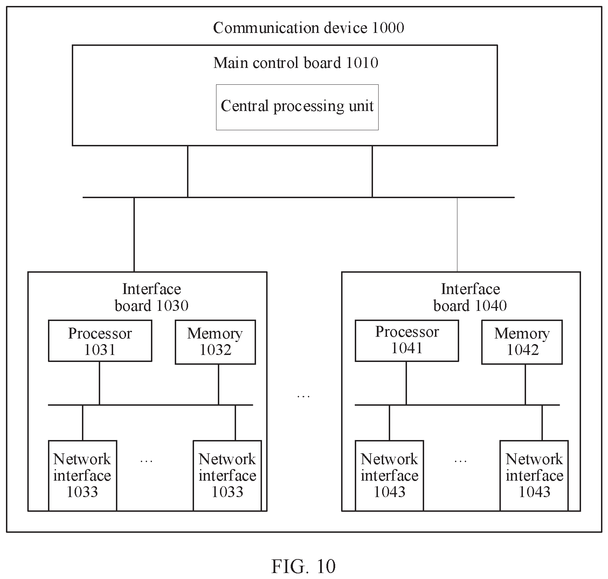

FIG. 10 is a diagram of a structure of a communication device according to an embodiment of this application. The communication device may be the access device or the routing and switching device in any one of the foregoing embodiments. The communication device 1000 may be a switch, a router, or another communication device that forwards a packet. In this embodiment, the communication device 1000 includes a main control board 1010, an interface board 1030, and an interface board 1040. When there are a plurality of interface boards, a switch fabric unit (not shown in the figure) may be included. The switch fabric unit is configured to complete data exchange between interface boards (the interface board is also referred to as a line card or a service board).

The main control board 1010 is configured to complete functions such as system management, device maintenance, and protocol processing. The interface boards 1030 and 1040 provide various service interfaces (such as a POS interface, a GE interface, and an ATM interface), and forward data flows. The main control board 1010 mainly includes three types of functional units: a system management and control unit, a system clock unit, and a system maintenance unit. The main control board 1010, the interface board 1030, and the interface board 1040 are connected to a system backplane through a system bus to implement interworking. The interface board 1030 includes one or more processors 1031. The processor 1031 is configured to control and manage the interface board, communicate with a central processing unit on the main control board, and forward a data flow. A memory 1032 on the interface board 1030 is configured to store a forwarding entry. The processor 1031 forwards a data flow by searching the forwarding entry stored in the memory 1032.

The interface board 1030 includes one or more communication interfaces (which may also be referred to as a network interface) 1033, configured to receive a data flow or other information sent by a terminal or another network device, and process the data flow or data according to instructions of the processor 1031. A specific implementation process is not described herein one by one.

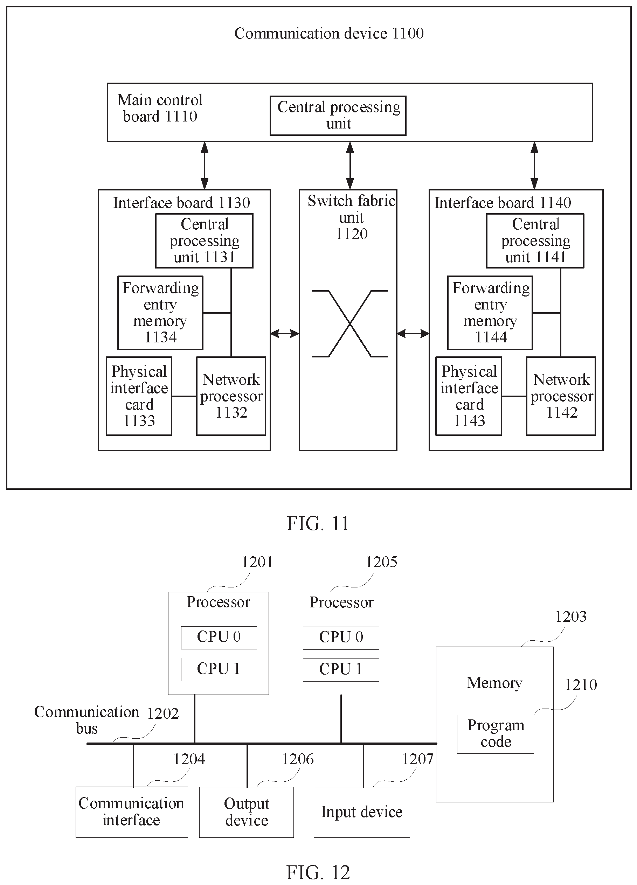

It may be understood that, as shown in FIG. 10, this embodiment of this application includes a plurality of interface boards, and uses a distributed forwarding mechanism. In this mechanism, operations on the interface board 1040 are basically similar to operations on the interface board 1030. For brevity, details are not described again. In addition, it may be understood that the processor 1031 on the interface board 1030 and/or a processor 1041 on the interface board 1040 in FIG. 10 may be dedicated hardware or a chip, for example, a network processor or an application-specific integrated circuit (application-specific integrated circuit, ASIC), to implement the foregoing functions. This implementation is generally referred to as a manner of using dedicated hardware or a chip for processing on a forwarding plane. For a specific implementation of using the network processor, namely, the dedicated hardware or the chip, refer to the embodiment shown in FIG. 11. In another implementation, the processor 1031 and/or the processor 1041 may also use a general-purpose processor, for example, a general-purpose CPU, to implement the functions described above.

In addition, it should be noted that there may be one or more main control boards. When there are a plurality of main control boards, the main control boards may include a primary main control board and a secondary main control board. There may be one or more interface boards. The device with a stronger data processing capability provides more interface boards. In a case of a plurality of interface boards, the plurality of interface boards may communicate with each other through one or more switch fabric units, and load sharing and redundancy backup may be jointly implemented by the plurality of interface boards. In a centralized forwarding architecture, the device may not need a switch fabric unit, and the interface board provides a function of processing service data of an entire system. In a distributed forwarding architecture, the device includes a plurality of interface boards, and may implement data exchange between the plurality of interface boards by using the switch fabric unit, to provide a large-capacity data exchange and processing capability. Therefore, a data access and processing capability of the communication device in the distributed architecture is greater than the device in the centralized architecture. A specific architecture that is to be used depends on a specific networking deployment scenario. This is not limited herein.

In some embodiments, the memory 1032 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used for carrying or storing expected program code in a form of instructions or a data structure and that is accessible by a computer. However, the memory is not limited hereto. The memory 1032 may exist independently, and is connected to the processor 1031 through a communication bus. The memory 1032 may alternatively be integrated with the processor 1031.

In some embodiments, the communication interface 1033 may be configured to communicate with another device or a communication network such as an Ethernet, a radio access network (radio access network, RAN), or a wireless local area network (wireless local area network, WLAN) through any apparatus such as a transceiver. The communication interface 1033 includes a wired communication interface, and may further include a wireless communication interface. The wired communication interface may be, for example, an Ethernet interface. The Ethernet interface may be an optical interface, an electrical interface, or a combination thereof. The wireless communication interface may be a WLAN interface, a cellular network communication interface, a combination thereof, or the like. When the communication device is used as any communication device in a domain, the communication interface 1033 is configured to forward a data packet to another communication device.

In some embodiments, the communication device may include a plurality of processors. Each of the processors may be a single-core processor or a multi-core processor. The processor herein may refer to one or more devices, circuits, and/or processing cores configured to process data (for example, computer program instructions).

In some embodiments, the memory 1032 is configured to store program code for performing the solutions of this application. The processor 1031 may execute the program code stored in the memory 1032, so that the communication device 1000 performs processing steps of the access device or the routing and switching device in the embodiments shown in FIG. 7 to FIG. 9. For specific implementation, refer to detailed descriptions in the embodiments shown in FIG. 7 to FIG. 9. Details are not described herein again.

FIG. 11 is a diagram of a structure of another communication device according to an embodiment of this application. The communication device may be the access device or the routing and switching device in any one of the foregoing embodiments. In this embodiment, the communication device 1100 includes: a main control board 1110, an interface board 1130, a switch fabric unit 1120, and an interface board 1140. The main control board 1110 is configured to complete functions such as system management, device maintenance, and protocol processing. The switch fabric unit 1120 is configured to complete data exchange between interface boards (the interface board is also referred to as a line card or a service board). The interface boards 1130 and 1140 provide various service interfaces (such as a POS interface, a GE interface, and an ATM interface), and forward data packets. A control plane includes management and control units on the main control board 1110 and management and control units on the interface boards 1130 and 1140. The main control board 1110 mainly includes three types of functional units: a system management and control unit, a system clock unit, and a system maintenance unit. The main control board 1110, the interface boards 1130 and 1140, and the switch fabric unit 1120 are connected to a system backplane through a system bus to implement interworking. A central processing unit 1131 on the interface board 1130 is configured to control and manage the interface board, and communicate with a central processing unit on the main control board. A forwarding entry memory 1134 on the interface board 1130 is configured to store a forwarding entry. A network processor 1132 forwards a data flow by searching the forwarding entry stored in the forwarding entry memory 1134.

A physical interface card 1133 of the interface board 1130 is configured to receive a data flow or other data sent by a terminal or another device. A specific implementation process is not described herein one by one.

The network processor 1132 is configured to process a received data flow and the like. Specific functions of the network processor 1132 are not described herein one by one. For example, the network processor 1132 may execute program code to enable the communication device 1100 to perform processing steps of the access device or the routing and switching device in the embodiments shown in FIG. 7 to FIG. 9. For specific implementation, refer to detailed descriptions in the embodiments shown in FIG. 7 to FIG. 9. Details are not described herein again.

It may be understood that, as shown in FIG. 11, this embodiment of this application includes a plurality of interface boards, and uses a distributed forwarding mechanism. In this mechanism, operations on the interface board 1140 are basically similar to operations on the interface board 1130. For brevity, details are not described again. In addition, as described above, functions of the network processor 1132 and a network processor 1142 in FIG. 11 may be replaced with those of an application-specific integrated circuit (application-specific integrated circuit).

In addition, it should be noted that there may be one or more main control boards. When there are a plurality of main control boards, the main control boards may include a primary main control board and a secondary main control board. There may be one or more interface boards. The device with a stronger data processing capability provides more interface boards. There may also be one or more physical interface cards on the interface board. There may be no switch fabric unit or one or more switch fabric units. When there are a plurality of switch fabric units, load balancing and redundancy backup may be implemented together. In a centralized forwarding architecture, the device may not need a switch fabric unit, and the interface board provides a function of processing service data of an entire system. In a distributed forwarding architecture, the device may include at least one switch fabric unit, and implements data exchange between a plurality of interface boards by using the switch fabric unit, to provide a large-capacity data exchange and processing capability. Therefore, a data access and processing capability of the communication device in the distributed architecture is greater than the device in the centralized architecture. A specific architecture that is to be used depends on a specific networking deployment scenario. This is not limited herein.

Refer to FIG. 12. FIG. 12 is a diagram of a structure of a communication device according to an embodiment of this application. In a possible implementation, the communication device is the access device or the routing and switching device in the embodiments shown in FIG. 1 to FIG. 9, and the communication device includes one or more processors 1201, a communication bus 1202, a memory 1203, and one or more communication interfaces 1204.

The processor 1201 is a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. In a possible implementation, the PLD is a complex programmable logic device (complex programmable logic device, CPLD), a field-programmable logic gate array (field-programmable gate array, FPGA), generic array logic (generic array logic, GAL), or any combination thereof. When the communication device is any communication device in embodiments of this application, the processor 1201 is configured to implement the optical communication method provided in any one of the embodiments shown in FIG. 2 to FIG. 10.

The communication bus 1202 is configured to transmit information between the components. In a possible implementation, the communication bus 1202 is classified into an address bus, a data bus, a control bus, and the like. For ease of representation, only one thick line is used to represent the bus in the figure, but this does not mean that there is only one bus or only one type of bus.

In a possible implementation, the memory 1203 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used for carrying or storing expected program code in a form of instructions or a data structure and that is accessible by a computer. However, the memory is not limited hereto. The memory 1203 exists independently, and is connected to the processor 1201 through the communication bus 1202, or the memory 1203 is integrated with the processor 1201.

The communication interface 1204 is configured to communicate with another device or a communication network by using any apparatus like a transceiver. The communication interface 1204 includes a wired communication interface. In a possible implementation, the communication interface further includes a wireless communication interface. The wired communication interface is, for example, an Ethernet interface. In a possible implementation, the Ethernet interface is an optical interface, an electrical interface, or a combination thereof. The wireless communication interface is a wireless local area network (wireless local area network, WLAN) interface, a cellular network communication interface, a combination thereof, or the like. When the communication device is used as any communication device in a domain, the communication interface 1204 is configured to forward a data packet to another communication device. When the communication device is used as a head node in a domain, the communication interface 1204 may be further configured to communicate with a controller in embodiments shown in FIG. 1 to FIG. 10, for example, receive a global slot orchestration parameter delivered by the controller.

In a possible implementation, in some embodiments, the communication device includes a plurality of processors, for example, a processor 1201 and a processor 1205 shown in FIG. 12. Each of these processors is a single-core processor or a multi-core processor. In a possible implementation, the processor herein refers to one or more devices, circuits, and/or processing cores configured to process data (for example, computer program instructions).

In some embodiments, the communication device further includes an output device 1206 and an input device 1207. The output device 1206 communicates with the processor 1201, and can display information in a plurality of manners. For example, the output device 1206 is a liquid crystal display (liquid crystal display, LCD), a light emitting diode (light emitting diode, LED) display device, a cathode ray tube (cathode ray tube, CRT) display device, a projector (projector), or the like. The input device 1207 communicates with the processor 1201, and can receive an input of a user in a plurality of manners. For example, the input device 1207 is a mouse, a keyboard, a touchscreen device, or a sensor device.

In some embodiments, the memory 1203 is configured to store program code 1210 for performing the solutions of this application. The processor 1201 may execute the program code 1210 stored in the memory 1203, so that the communication device performs processing steps of the access device or the routing and switching device in the embodiments shown in FIG. 7 to FIG. 9. For specific implementation, refer to detailed descriptions in the embodiments shown in FIG. 7 to FIG. 9. Details are not described herein again.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium mentioned in embodiments of this application may be a nonvolatile storage medium, that is, may be a non-transitory storage medium.

It should be understood that "at least one" mentioned in this specification refers to one or more, and "a plurality of" refers to two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, both the upstream information and the downstream information in embodiments of this application are obtained under full authorization.

The foregoing descriptions are merely embodiments of this application, but are not intended to limit this application. Any modification, equivalent replacement, or improvement made without departing from the spirit and principle of this application should fall within the protection scope of this application.

## Claims

1. An optical communication system, wherein the optical communication system comprises a central optical module, an intermediate device, and a plurality of access-side optical modules, wherein the central optical module is connected to the intermediate device through an optical fiber, the intermediate device comprises a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths;
the central optical module is configured to transmit a first downstream optical signal to the intermediate device, wherein the first downstream optical signal has a plurality of downstream wavelengths, and the plurality of downstream wavelengths comprise a downstream wavelength corresponding to at least one access-side optical module;
the intermediate device is configured to: receive a second downstream optical signal, split the second downstream optical signal into a plurality of third downstream optical signals, and transmit, through each of the plurality of ports, a third downstream optical signal to an access-side optical module connected to the port, wherein the second downstream optical signal is an optical signal obtained by transmitting the first downstream optical signal through the optical fiber between the central optical module and the intermediate device, and each of the plurality of third downstream optical signals has the plurality of downstream wavelengths; and
each of the plurality of access-side optical modules is configured to: receive a fourth downstream optical signal, and obtain, from the fourth downstream optical signal, an optical signal of a downstream wavelength corresponding to the access-side optical module, wherein the fourth downstream optical signal is an optical signal obtained by transmitting the third downstream optical signal through an optical fiber between the access-side optical module and the port.

2. The system according to claim 1, wherein the access-side optical module comprises a first filter; and
the first filter is configured to filter the fourth downstream optical signal, to obtain the optical signal of the downstream wavelength corresponding to the access-side optical module.

3. The system according to claim 2, wherein the central optical module comprises a first optical multiplexer, the intermediate device further comprises a first optical splitter, and the first optical splitter is separately connected to the plurality of ports through optical fibers;
the first optical multiplexer is configured to: obtain optical signals of a plurality of downstream wavelengths, combine the optical signals of the plurality of downstream wavelengths into the first downstream optical signal, and transmit the first downstream optical signal to the first optical splitter; and
the first optical splitter is configured to: receive the second downstream optical signal, split the second downstream optical signal into the plurality of third downstream optical signals in an energy division manner, and transmit a third downstream optical signal to each of the plurality of ports.

4. The system according to claim 3, wherein the intermediate device further comprises a first beamsplitter, the central optical module further comprises a second beamsplitter, the first beamsplitter is separately connected to the second beamsplitter and the first optical splitter through optical fibers, and the second beamsplitter is further connected to the first optical multiplexer through an optical fiber;
the first optical multiplexer is further configured to transmit the first downstream optical signal to the second beamsplitter;
the second beamsplitter is configured to transmit the first downstream optical signal to the first beamsplitter; and
the first beamsplitter is configured to: receive the second downstream optical signal, and transmit the second downstream optical signal to the first optical splitter.

5. The system according to claim 3, wherein the first optical multiplexer is connected to the first optical splitter through an optical fiber; and
the first optical multiplexer is further configured to transmit the first downstream optical signal to the first optical splitter.

6. The system according to any one of claims 1 to 5, wherein each access-side optical module further corresponds to an upstream wavelength, and different access-side optical modules correspond to different upstream wavelengths;
each of the plurality of access-side optical modules is further configured to transmit, to the port connected to the access-side optical module, an optical signal of an upstream wavelength corresponding to the access-side optical module;
the intermediate device is further configured to: obtain, through the plurality of ports, optical signals of a plurality of upstream wavelengths transmitted by the plurality of access-side optical modules, combine the received optical signals of the plurality of upstream wavelengths into a first upstream optical signal, and transmit the first upstream optical signal to the central optical module; and
the central optical module is further configured to receive a second upstream optical signal, and demultiplex the second upstream optical signal into the optical signals of the plurality of upstream wavelengths, wherein the second upstream optical signal is an optical signal obtained by transmitting the first upstream optical signal through the optical fiber between the intermediate device and the central optical module.

7. The system according to claim 6, wherein the access-side optical module further comprises a first laser, and the first laser is connected to the port through an optical fiber; and
the first laser is configured to generate an optical signal of an upstream wavelength corresponding to the access-side optical module, and transmit the optical signal of the upstream wavelength to the connected port.

8. The system according to claim 6 or 7, wherein the intermediate device further comprises a first optical coupler, the central optical module comprises a first optical demultiplexer, and the first optical coupler is separately connected to the plurality of ports through optical fibers;
the first optical coupler is configured to couple the optical signals of the plurality of upstream wavelengths into the first upstream optical signal in an energy combination manner; and
the first optical demultiplexer is configured to demultiplex the second upstream optical signal into the optical signals of the plurality of upstream wavelengths.

9. The system according to claim 8, wherein the intermediate device further comprises a first beamsplitter, the central optical module further comprises a second beamsplitter, the first beamsplitter is separately connected to the second beamsplitter and the first optical coupler through optical fibers, and the second beamsplitter is further connected to the first optical demultiplexer through an optical fiber;
the first optical coupler is further configured to transmit the first upstream optical signal to the first beamsplitter;
the first beamsplitter is configured to transmit the first upstream optical signal to the second beamsplitter; and
the second beamsplitter is configured to: receive the second upstream optical signal, and transmit the second upstream optical signal to the first optical demultiplexer.

10. The system according to claim 8, wherein the first optical demultiplexer is connected to the first optical coupler through an optical fiber; and
the first optical coupler is configured to transmit the first upstream optical signal to the first optical demultiplexer.

11. The system according to claim 1, wherein the access-side optical module comprises a third beamsplitter and a second filter, and the third beamsplitter is separately connected to the port and the second filter through optical fibers;
the third beamsplitter is configured to: receive the fourth downstream optical signal, and transmit the fourth downstream optical signal to the second filter; and
the second filter is configured to filter the fourth downstream optical signal, to obtain the optical signal of the downstream wavelength corresponding to the access-side optical module.

12. The system according to claim 11, wherein the intermediate device further comprises a second optical splitter, the second optical splitter is separately connected to the plurality of ports through optical fibers, and the second optical splitter is further connected to the central optical module through an optical fiber; and
the second optical splitter is configured to: split the second downstream optical signal into the plurality of third downstream optical signals in an energy division manner, and transmit the third downstream optical signals to the plurality of ports.

13. The system according to claim 12, wherein each access-side optical module further corresponds to an upstream wavelength, different access-side optical modules correspond to different upstream wavelengths, the access-side optical module further comprises a second laser, and the second laser is connected to the third beamsplitter through an optical fiber;
the second laser is configured to: generate an optical signal of an upstream wavelength corresponding to the access-side optical module, and transmit the optical signal of the upstream wavelength to the third beamsplitter;
the third beamsplitter is further configured to transmit the optical signal of the upstream wavelength to the connected port; and
the second optical splitter is further configured to: couple, in an energy combination manner, optical signals of a plurality of upstream wavelengths transmitted by the plurality of ports into a first upstream optical signal, and transmit the first upstream optical signal to the central optical module.

14. The system according to any one of claims 1 to 13, wherein the access-side optical module is inserted into an access device, or the access-side optical module is integrated in an access device, and the access device is configured to access the optical communication system via the access-side optical module; and
the central optical module is inserted into a routing and switching device, or the central optical module is integrated in a routing and switching device, and the routing and switching device is configured to communicate with the access device via the central optical module.

15. An optical communication method, applied to a first optical module in a plurality of access-side optical modules comprised in an optical communication system, wherein the optical communication system further comprises an intermediate device, the intermediate device comprises a plurality of ports, each of the plurality of access-side optical modules is connected to any one of the plurality of ports through an optical fiber, and different access-side optical modules are connected to different ports; the first optical module is connected to a first port in the plurality of ports through an optical fiber; each access-side optical module corresponds to a downstream wavelength, different access-side optical modules correspond to different downstream wavelengths, and the first optical module corresponds to a first downstream wavelength; and the method comprises:
receiving a downstream optical signal transmitted by the first port, wherein the downstream optical signal has a plurality of downstream wavelengths, and the plurality of downstream wavelengths comprise a downstream wavelength corresponding to at least one access-side optical module; and
obtaining an optical signal of the first downstream wavelength from the downstream optical signal.

16. The method according to claim 15, wherein the first optical module comprises a first filter; and
obtaining the optical signal of the first downstream wavelength from the downstream optical signal comprises:
filtering, by the first filter, the downstream optical signal to obtain the optical signal of the first downstream wavelength.

17. The method according to claim 15 or 16, wherein each access-side optical module further corresponds to an upstream wavelength, different access-side optical modules correspond to different upstream wavelengths, and the first optical module further corresponds to a first upstream wavelength; and the method further comprises:
generating an optical signal of the first upstream wavelength; and
transmitting the optical signal of the first upstream wavelength to the first port.

18. The method according to claim 17, wherein the first optical module further comprises a first laser, and the first laser is connected to the first port through an optical fiber; and
generating the optical signal of the first upstream wavelength comprises:
generating, by the first laser, the optical signal of the first upstream wavelength.

19. The method according to claim 15, wherein the first optical module comprises a first beamsplitter and a second filter, and the first beamsplitter is separately connected to the first port and the second filter through optical fibers;
receiving the downstream optical signal transmitted by the first port comprises:
receiving, by the first beamsplitter, the downstream optical signal transmitted by the first port; and
obtaining the optical signal of the first downstream wavelength from the downstream optical signal comprises:
transmitting, by the first beamsplitter, the downstream optical signal to the second filter; and
demultiplexing, by the second filter, the downstream optical signal to obtain the optical signal of the first downstream wavelength.

20. The method according to claim 19, wherein each access-side optical module further corresponds to an upstream wavelength, different access-side optical modules correspond to different upstream wavelengths, the first optical module further corresponds to a first upstream wavelength, the first optical module further comprises a second laser, and the second laser is connected to the first beamsplitter; and the method further comprises:
generating, by the second laser, an optical signal of the first upstream wavelength, and transmitting the optical signal of the first upstream wavelength to the first beamsplitter; and
transmitting, by the first beamsplitter, the optical signal of the first upstream wavelength to the first port.

21. The method according to any one of claims 15 to 20, wherein the first optical module is inserted into an access device, or the first optical module is integrated in an access device, and the access device is configured to access the optical communication system via the first optical module.

22. An optical communication method, applied to an intermediate device in an optical communication system, wherein the optical communication system further comprises a central optical module and a plurality of access-side optical modules, wherein the central optical module is connected to the intermediate device through an optical fiber, the intermediate device comprises a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths; and the method comprises:
receiving a first downstream optical signal transmitted by the central optical module, to obtain a second downstream optical signal, wherein the first downstream optical signal has a plurality of downstream wavelengths, the plurality of downstream wavelengths comprise a downstream wavelength corresponding to at least one access-side optical module, and the second downstream optical signal is an optical signal obtained by transmitting the first downstream optical signal through the optical fiber between the central optical module and the intermediate device;
splitting the second downstream optical signal into a plurality of third downstream optical signals, wherein each of the plurality of third downstream optical signals has the plurality of downstream wavelengths; and
transmitting, through each of the plurality of ports, a third downstream optical signal to an access-side optical module connected to the port, wherein the third downstream optical signal is used by each of the plurality of access-side optical modules to obtain an optical signal of a downstream wavelength corresponding to the access-side optical module.

23. The method according to claim 22, wherein the intermediate device further comprises a first optical splitter, and the first optical splitter is separately connected to the plurality of ports through optical fibers; and
splitting the second downstream optical signal into the plurality of third downstream optical signals comprises:
splitting, by the first optical splitter, the second downstream optical signal into the plurality of third downstream optical signals in an energy division manner.

24. The method according to claim 23, wherein the intermediate device further comprises a first beamsplitter, the central optical module comprises a second beamsplitter, and the first beamsplitter is separately connected to the second beamsplitter and the first optical splitter through optical fibers; and
receiving the first downstream optical signal transmitted by the central optical module, to obtain the second downstream optical signal comprises:
receiving, by the first beamsplitter, the first downstream optical signal transmitted by the second beamsplitter, to obtain the second downstream optical signal.

25. The method according to claim 23, wherein the central optical module comprises a first optical multiplexer, and the first optical multiplexer is connected to the first optical splitter through an optical fiber; and
receiving the first downstream optical signal transmitted by the central optical module, to obtain the second downstream optical signal comprises:
receiving, by the first optical splitter, the first downstream optical signal transmitted by the first optical multiplexer, to obtain the second downstream optical signal.

26. The method according to any one of claims 22 to 25, wherein each access-side optical module further corresponds to an upstream wavelength, and different access-side optical modules correspond to different upstream wavelengths; and the method further comprises:
receiving optical signals of a plurality of upstream wavelengths through the plurality of ports, wherein the plurality of upstream wavelengths comprise an upstream wavelength corresponding to at least one access-side optical module;
combining the optical signals of the plurality of upstream wavelengths into a first upstream optical signal; and
transmitting the first upstream optical signal to the central optical module.

27. The method according to claim 26, wherein the intermediate device further comprises a first optical coupler, and the first optical coupler is separately connected to the plurality of ports through optical fibers; and
combining the optical signals of the plurality of upstream wavelengths into the first upstream optical signal comprises:
combining, by the first optical coupler, the optical signals of the plurality of upstream wavelengths into the first upstream optical signal in an energy combination manner.

28. The method according to claim 27, wherein the intermediate device further comprises a first beamsplitter, the central optical module further comprises a second beamsplitter, and the first beamsplitter is separately connected to the second beamsplitter and the first optical coupler through optical fibers; and
transmitting the first upstream optical signal to the central optical module comprises:
transmitting, by the first optical coupler, the first upstream optical signal to the first beamsplitter; and
transmitting, by the first beamsplitter, the first upstream optical signal to the second beamsplitter.

29. The method according to claim 23, wherein the first optical splitter is further connected to the central optical module through an optical fiber; and
receiving the first downstream optical signal transmitted by the central optical module, to obtain the second downstream optical signal comprises:
receiving, by the first optical splitter, the first downstream optical signal transmitted by the central optical module, to obtain the second downstream optical signal.

30. The method according to claim 29, wherein each access-side optical module further corresponds to an upstream wavelength, and different access-side optical modules correspond to different upstream wavelengths; and the method further comprises:
obtaining, by the first optical splitter, optical signals of a plurality of upstream wavelengths transmitted by the plurality of ports, wherein the plurality of upstream wavelengths comprise an upstream wavelength corresponding to at least one access-side optical module; and
coupling, by the first optical splitter in an energy combination manner, the optical signals of the plurality of upstream wavelengths transmitted by the plurality of ports into a first upstream optical signal, and transmitting the first upstream optical signal to the central optical module.

31. An optical communication method, applied to a central optical module in an optical communication system, wherein the optical communication system further comprises an intermediate device and a plurality of access-side optical modules, wherein the central optical module is connected to the intermediate device through an optical fiber, the intermediate device comprises a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths; and the method comprises:
generating optical signals of a plurality of downstream wavelengths, wherein the plurality of downstream wavelengths comprise a downstream wavelength corresponding to at least one access-side optical module;
combining the optical signals of the plurality of downstream wavelengths into a first downstream optical signal, wherein the first downstream optical signal has the plurality of downstream wavelengths; and
transmitting the first downstream optical signal to the intermediate device, wherein the first downstream optical signal is used by the intermediate device to split a received second downstream optical signal into a plurality of third downstream optical signals, and transmitting, through each of the plurality of ports, a third downstream optical signal to an access-side optical module connected to the port, so that the access-side optical module obtains, from the received downstream optical signal, an optical signal of a downstream wavelength corresponding to the access-side optical module, wherein the second downstream optical signal is an optical signal obtained by transmitting the first downstream optical signal through the optical fiber between the central optical module and the intermediate device, and the fourth downstream optical signal is an optical signal obtained by transmitting the third downstream optical signal through an optical fiber between the access-side optical module and the port.

32. The method according to claim 31, wherein the central optical module is inserted into a routing and switching device, or the central optical module is integrated in a routing and switching device, and the routing and switching device is configured to access the optical communication system via the central optical module.

33. A first optical module, wherein the first optical module is any one of a plurality of access-side optical modules comprised in an optical communication system, wherein the optical communication system further comprises an intermediate device, the intermediate device comprises a plurality of ports, each of the plurality of access-side optical modules is connected to any one of the plurality of ports through an optical fiber, and different access-side optical modules are connected to different ports; the first optical module is connected to a first port in the plurality of ports through an optical fiber; each access-side optical module corresponds to a downstream wavelength, different access-side optical modules correspond to different downstream wavelengths, and the first optical module corresponds to a first downstream wavelength; and the first optical module is configured to:
receive a downstream optical signal transmitted by the first port, wherein the downstream optical signal has a plurality of downstream wavelengths, and the plurality of downstream wavelengths comprise a downstream wavelength corresponding to at least one access-side optical module; and
obtain an optical signal of the first downstream wavelength from the downstream optical signal.

34. An intermediate device, wherein the intermediate device is comprised in an optical communication system, and the optical communication system further comprises a central optical module and a plurality of access-side optical modules, wherein the central optical module is connected to the intermediate device through an optical fiber, the intermediate device comprises a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths; and the intermediate device is configured to:
receive a first downstream optical signal transmitted by the central optical module, to obtain a second downstream optical signal, wherein the first downstream optical signal has a plurality of downstream wavelengths, the plurality of downstream wavelengths comprise a downstream wavelength corresponding to at least one access-side optical module, and the second downstream optical signal is an optical signal obtained by transmitting the first downstream optical signal through the optical fiber between the central optical module and the intermediate device;
split the second downstream optical signal into a plurality of third downstream optical signals, wherein each of the plurality of third downstream optical signals has the plurality of downstream wavelengths; and
transmit, through each of the plurality of ports, a third downstream optical signal to an access-side optical module connected to the port, wherein the third downstream optical signal is used by each of the plurality of access-side optical modules to obtain an optical signal of a downstream wavelength corresponding to the access-side optical module.

35. A central optical module, wherein the central optical module is comprised in an optical communication system, and the optical communication system further comprises an intermediate device and a plurality of access-side optical modules, wherein the central optical module is connected to the intermediate device through an optical fiber, the intermediate device comprises a plurality of ports, each of the plurality of access-side optical modules is connected to any one of the plurality of ports through an optical fiber, different access-side optical modules are connected to different ports, each access-side optical module corresponds to a downstream wavelength, and different access-side optical modules correspond to different downstream wavelengths; and the central optical module is configured to:
generate optical signals of a plurality of downstream wavelengths, wherein the plurality of downstream wavelengths comprise a downstream wavelength corresponding to at least one access-side optical module;
combine the optical signals of the plurality of downstream wavelengths into a first downstream optical signal, wherein the first downstream optical signal has the plurality of downstream wavelengths; and
transmit the first downstream optical signal to the intermediate device, wherein the first downstream optical signal is used by the intermediate device to split a received second downstream optical signal into a plurality of third downstream optical signals, and transmit, through each of the plurality of ports, a third downstream optical signal to an access-side optical module connected to the port, so that each of the plurality of access-side optical modules obtains, from a received fourth downstream optical signal, an optical signal of a downstream wavelength corresponding to the access-side optical module, wherein the second downstream optical signal is an optical signal obtained by transmitting the first downstream optical signal through the optical fiber between the central optical module and the intermediate device, and the fourth downstream optical signal is an optical signal obtained by transmitting the third downstream optical signal through an optical fiber between the access-side optical module and the port.

36. An optical communication system, wherein the optical communication system comprises a routing and switching device, and the routing and switching device is inserted with a central optical module or is integrated with a central optical module; the optical communication system further comprises an intermediate device and a plurality of access-side optical modules, wherein the central optical module is connected to the intermediate device through an optical fiber, the routing and switching device further comprises a transceiver matching module, and the central optical module comprises a first optical demultiplexer and a plurality of photoelectric conversion submodules, wherein the first optical demultiplexer is separately connected to the plurality of photoelectric conversion submodules through optical fibers, each of the plurality of photoelectric conversion submodules corresponds to one upstream wavelength and one downstream wavelength that have a matching relationship, and different photoelectric conversion submodules correspond to different upstream wavelengths and different downstream wavelengths; the intermediate device comprises a first optical coupler and a plurality of ports, and the first optical coupler is separately connected to the plurality of ports through optical fibers; and each of the plurality of access-side optical modules is connected to any one of the plurality of ports through an optical fiber, different access-side optical modules are connected to different ports, each port corresponds to a downstream wavelength, different ports correspond to different downstream wavelengths, each access-side optical module corresponds to an upstream wavelength, and different access-side optical modules correspond to different upstream wavelengths;
each of the plurality of photoelectric conversion submodules is configured to: obtain a first downstream electrical signal transmitted by the routing and switching device, convert the obtained first downstream electrical signal into an optical signal of a downstream wavelength corresponding to the photoelectric conversion submodule, and transmit the optical signal of the downstream wavelength to the intermediate device;
the intermediate device is configured to: obtain optical signals of a plurality of downstream wavelengths, and transmit, through each of the plurality of ports, an optical signal of a downstream wavelength corresponding to the port to an access-side optical module connected to the port, wherein the plurality of downstream wavelengths comprise the downstream wavelength corresponding to the port;
a first optical module in the plurality of access-side optical modules is configured to receive an optical signal of a first downstream wavelength transmitted by a first port connected to the first optical module, and is further configured to transmit an optical signal of a first upstream wavelength to the first port, wherein the first downstream wavelength does not match the first upstream wavelength, and the first optical module is any one of the plurality of access-side optical modules;
the intermediate device is further configured to: receive optical signals of a plurality of upstream wavelengths through the plurality of ports, couple the optical signals of the plurality of upstream wavelengths into a first upstream optical signal via the first optical coupler, and transmit the first upstream optical signal to the central optical module, wherein the plurality of upstream wavelengths comprise an upstream wavelength corresponding to at least one access-side optical module;
the first optical demultiplexer is configured to: obtain the first upstream optical signal, demultiplex the first upstream optical signal into the optical signals of the plurality of upstream wavelengths, and separately transmit an optical signal of an upstream wavelength corresponding to each photoelectric conversion submodule to the plurality of photoelectric conversion submodules;
each of the plurality of photoelectric conversion submodules is further configured to: convert the optical signal of the upstream wavelength corresponding to the photoelectric conversion submodule into a first upstream electrical signal, and transmit the first upstream electrical signal to the transceiver matching module; and
the transceiver matching module is configured to match the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby.

37. The system according to claim 36, wherein the central optical module further comprises a first optical multiplexer, the intermediate device further comprises a second optical demultiplexer, the first optical multiplexer is separately connected to the plurality of photoelectric conversion submodules through optical fibers, and the second optical demultiplexer is separately connected to the plurality of ports through optical fibers;
the first optical multiplexer is configured to: combine the optical signals of the plurality of downstream wavelengths into a first downstream optical signal, and transmit the first downstream optical signal to the second optical demultiplexer; and
the second optical demultiplexer is configured to: receive a second downstream optical signal, demultiplex the second downstream optical signal into the optical signals of the plurality of downstream wavelengths, and separately transmit an optical signal of a downstream wavelength corresponding to each port to the plurality of ports, wherein the second downstream optical signal is an optical signal obtained by transmitting the first downstream optical signal through the optical fiber between the central optical module and the intermediate device.

38. The system according to claim 37, wherein the intermediate device further comprises a first beamsplitter, the central optical module further comprises a second beamsplitter, the first beamsplitter is separately connected to the second optical demultiplexer, the first optical coupler, and the second beamsplitter through optical fibers, and the second beamsplitter is further separately connected to the first optical multiplexer and the first optical demultiplexer through optical fibers;
the first beamsplitter is configured to: receive the first upstream optical signal transmitted by the first optical coupler, transmit the first upstream optical signal to the second beamsplitter, receive the first downstream optical signal transmitted by the second beamsplitter, to obtain the second upstream optical signal, and transmit the second downstream optical signal to the second optical demultiplexer; and
the second beamsplitter is configured to: obtain the first downstream optical signal transmitted by the first optical multiplexer, transmit the first downstream optical signal to the first beamsplitter, obtain the first upstream optical signal transmitted by the first beamsplitter, to obtain a second upstream optical signal, and transmit the second upstream optical signal to the first optical demultiplexer.

39. The system according to claim 38, wherein the first optical multiplexer is connected to the second optical demultiplexer, and the first optical coupler is connected to the first optical demultiplexer;
the first optical multiplexer is configured to transmit the first downstream optical signal to the second optical demultiplexer; and
the first optical coupler is configured to transmit the first upstream optical signal to the first optical demultiplexer.

40. The system according to any one of claims 36 to 39, wherein the access-side optical module is inserted into an access device, or the access-side optical module is integrated in an access device, and the access device is configured to access the optical communication system via the access-side optical module.

41. An optical communication method, applied to a first optical module in a plurality of access-side optical modules comprised in an optical communication system, wherein the optical communication system further comprises an intermediate device and a routing and switching device, the routing and switching device is connected to the intermediate device through an optical fiber, the intermediate device comprises a plurality of ports, and the first optical module is connected to a first port in the plurality of ports through an optical fiber, wherein the first port is any one of the plurality of ports, each of the plurality of ports corresponds to a downstream wavelength, different ports correspond to different downstream wavelengths, the first port corresponds to a first downstream wavelength, the downstream wavelength further matches an upstream wavelength, and different downstream wavelengths match different upstream wavelengths; the first optical module corresponds to a first upstream wavelength, and the first upstream wavelength does not match the first downstream wavelength; and the method comprises:
receiving an optical signal of the first downstream wavelength transmitted by the first port; and
transmitting an optical signal of the first upstream wavelength to the first port, to transmit the optical signal of the first upstream wavelength to the routing and switching device via the intermediate device, wherein the routing and switching device is configured to match, for a same access-side optical module, an optical signal of a downstream wavelength received thereby with an optical signal of an upstream wavelength sent thereby.

42. An optical communication method, applied to an intermediate device in an optical communication system, wherein the optical communication system further comprises a routing and switching device and a plurality of access-side optical modules, the routing and switching device is connected to the intermediate device through an optical fiber, the intermediate device comprises a first optical coupler and a plurality of ports, the first optical coupler is separately connected to the plurality of ports through optical fibers, each of the plurality of access-side optical modules is connected to any one of the plurality of ports through an optical fiber, different access-side optical modules are connected to different ports, each of the plurality of ports corresponds to a downstream wavelength, different ports correspond to different downstream wavelengths, the downstream wavelength further matches an upstream wavelength, different downstream wavelengths match different upstream wavelengths, each access-side optical module corresponds to an upstream wavelength, and different access-side optical modules correspond to different upstream wavelengths; and the method comprises:
obtaining optical signals of a plurality of downstream wavelengths transmitted by the routing and switching device, wherein the plurality of downstream wavelengths comprise a downstream wavelength corresponding to at least one port;
transmitting, through each of the plurality of ports, an optical signal of a downstream wavelength corresponding to the port to an access-side optical module connected to the port, and receiving, through each of the plurality of ports, an optical signal of an upstream wavelength transmitted by the access-side optical module connected to the port, wherein for a same port in the plurality of ports, a downstream wavelength of an optical signal sent thereby does not match an upstream wavelength of an optical signal received thereby;
coupling, via the first optical coupler, optical signals of a plurality of upstream wavelengths received through the plurality of ports into a first upstream optical signal; and
transmitting the first upstream optical signal to the routing and switching device, wherein the routing and switching device is configured to determine, for a same access-side optical module by matching the optical signals of the plurality of upstream wavelengths with the optical signals of the plurality of downstream wavelengths, an optical signal of an upstream wavelength sent thereby and an optical signal of a downstream wavelength received thereby.

43. An optical communication method, applied to a routing and switching device in an optical communication system, wherein the routing and switching device is inserted with a central optical module or is integrated with a central optical module; the optical communication system further comprises an intermediate device and a plurality of access-side optical modules, wherein the central optical module is connected to the intermediate device through an optical fiber, the routing and switching device further comprises a transceiver matching module, and the central optical module comprises a first optical demultiplexer and a plurality of photoelectric conversion submodules, wherein the first optical demultiplexer is separately connected to the plurality of photoelectric conversion submodules through optical fibers, each of the plurality of photoelectric conversion submodules corresponds to one upstream wavelength and one downstream wavelength that have a matching relationship, and different photoelectric conversion submodules correspond to different upstream wavelengths and different downstream wavelengths; the intermediate device comprises a plurality of ports, each of the plurality of access-side optical modules is connected to any one of the plurality of ports through an optical fiber, different access-side optical modules are connected to different ports, each port corresponds to a downstream wavelength, different ports correspond to different downstream wavelengths, each access-side optical module corresponds to an upstream wavelength, and different access-side optical modules correspond to different upstream wavelengths; and the method comprises:
obtaining, by each of the plurality of photoelectric conversion submodules, a first downstream electrical signal transmitted by the routing and switching device, converting the obtained first downstream electrical signal into an optical signal of a downstream wavelength corresponding to the photoelectric conversion submodule, and transmitting the optical signal of the downstream wavelength to the intermediate device;
receiving, by each of the plurality of photoelectric conversion submodules, an optical signal that is of an upstream wavelength corresponding to the photoelectric conversion submodule and that is transmitted by the intermediate device, converting the optical signal of the upstream wavelength corresponding to the photoelectric conversion submodule into a first upstream electrical signal, and transmitting the first upstream electrical signal to the transceiver matching module; and
matching, by the transceiver matching module, the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby.

44. A first optical module, wherein the first optical module is any one of a plurality of access-side optical modules comprised in an optical communication system, the optical communication system further comprises an intermediate device and a routing and switching device, the routing and switching device is connected to the intermediate device through an optical fiber, the intermediate device comprises a plurality of ports, and the first optical module is connected to a first port in the plurality of ports through an optical fiber, wherein the first port is any one of the plurality of ports, each port corresponds to a downstream wavelength, different ports correspond to different downstream wavelengths, the first port corresponds to a first downstream wavelength, each downstream wavelength further matches an upstream wavelength, and different downstream wavelengths match different upstream wavelengths; the first optical module corresponds to a first upstream wavelength, and the first upstream wavelength does not match the first downstream wavelength; and the first optical module is configured to:
receive an optical signal of the first downstream wavelength transmitted by the first port; and
transmit an optical signal of the first upstream wavelength to the first port, to transmit the optical signal of the first upstream wavelength to the routing and switching device via the intermediate device, wherein the routing and switching device is configured to match, for a same access-side optical module, an optical signal of a downstream wavelength received thereby with an optical signal of an upstream wavelength sent thereby.

45. An intermediate device, comprised in an optical communication system, wherein the optical communication system further comprises a routing and switching device and a plurality of access-side optical modules, the routing and switching device is connected to the intermediate device through an optical fiber, the intermediate device comprises a first optical coupler and a plurality of ports, the first optical coupler is separately connected to the plurality of ports through optical fibers, each of the plurality of access-side optical modules is connected to any one of the plurality of ports through an optical fiber, different access-side optical modules are connected to different ports, each port corresponds to a downstream wavelength, different ports correspond to different downstream wavelengths, each downstream wavelength further matches an upstream wavelength, different downstream wavelengths match different upstream wavelengths, each access-side optical module corresponds to an upstream wavelength, and different access-side optical modules correspond to different upstream wavelengths; and the intermediate device is configured to:
obtain optical signals of a plurality of downstream wavelengths transmitted by the routing and switching device, wherein the plurality of downstream wavelengths comprise a downstream wavelength corresponding to at least one port;
transmit, through each of the plurality of ports, an optical signal of a downstream wavelength corresponding to the port to an access-side optical module connected to the port, and receive, through each of the plurality of ports, an optical signal of an upstream wavelength transmitted by the access-side optical module connected to the port, wherein for a same port in the plurality of ports, a downstream wavelength of an optical signal sent thereby does not match an upstream wavelength of an optical signal received thereby;
couple, via the first optical coupler, optical signals of a plurality of upstream wavelengths received through the plurality of ports into a first upstream optical signal; and
transmit the first upstream optical signal to the routing and switching device, wherein the routing and switching device is configured to determine, for a same access-side optical module by matching the optical signals of the plurality of upstream wavelengths with the optical signals of the plurality of downstream wavelengths, an optical signal of an upstream wavelength sent thereby and an optical signal of a downstream wavelength received thereby.

46. A routing and switching device, wherein the routing and switching device is comprised in an optical communication system, the routing and switching device is inserted with a central optical module or is integrated with a central optical module; the optical communication system further comprises an intermediate device and a plurality of access-side optical modules, wherein the central optical module is connected to the intermediate device through an optical fiber, the routing and switching device further comprises a transceiver matching module, and the central optical module comprises a first optical demultiplexer and a plurality of photoelectric conversion submodules, wherein the first optical demultiplexer is separately connected to the plurality of photoelectric conversion submodules through optical fibers, each of the plurality of photoelectric conversion submodules corresponds to one upstream wavelength and one downstream wavelength that have a matching relationship, and different photoelectric conversion submodules correspond to different upstream wavelengths and different downstream wavelengths; and the intermediate device comprises a plurality of ports, each of the plurality of access-side optical modules is connected to any one of the plurality of ports through an optical fiber, different access-side optical modules are connected to different ports, each port corresponds to a downstream wavelength, different ports correspond to different downstream wavelengths, each access-side optical module corresponds to an upstream wavelength, and different access-side optical modules correspond to different upstream wavelengths;
each of the plurality of photoelectric conversion submodules is configured to: obtain a first downstream electrical signal transmitted by the routing and switching device, convert the obtained first downstream electrical signal into an optical signal of a downstream wavelength corresponding to the photoelectric conversion submodule, and transmit the optical signal of the downstream wavelength to the intermediate device;
each of the plurality of photoelectric conversion submodules is further configured to: receive an optical signal that is of an upstream wavelength corresponding to the photoelectric conversion submodule and that is transmitted by the intermediate device, convert the received optical signal of the upstream wavelength into a first upstream electrical signal, and transmit the first upstream electrical signal to the transceiver matching module; and
the transceiver matching module is configured to match the plurality of first downstream electrical signals transmitted by the plurality of photoelectric conversion submodules with a plurality of first upstream electrical signals, to determine, for a same access-side optical module, an optical signal of an upstream wavelength sent thereby and an optical signal of a downstream wavelength received thereby.

47. A computer-readable storage medium, wherein the storage medium stores a computer program; and when the computer program is executed by a processor, steps of the method according to any one of claims 15 to 32 and claims 41 to 43 are implemented.

48. A computer program product, wherein the computer program product stores computer instructions; and when the computer instructions are executed by a processor, steps of the method according to any one of claims 15 to 32 and claims 41 to 43 are implemented.
